(19) Europäisches Patentamt
European Patent Office
Office européen des brevets

(11) EP 2 752 694 A1

(12) **EUROPEAN PATENT APPLICATION**
published in accordance with Art. 153(4) EPC

(43) Date of publication:
**09.07.2014 Bulletin 2014/28**

(21) Application number: **12830668.5**

(22) Date of filing: **05.09.2012**

(51) Int Cl.:
***G02B 5/30*** *(2006.01)* ***B32B 27/30*** *(2006.01)*
***C09B 31/30*** *(2006.01)* ***G02F 1/1335*** *(2006.01)*

(86) International application number:
**PCT/JP2012/072641**

(87) International publication number:
**WO 2013/035751 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 JP 2011197599**

(71) Applicants:
- **Nippon Kayaku Kabushiki Kaisha**
  **Tokyo 102-8172 (JP)**
- **Polatechno Co., Ltd.**
  **Joetsu-shi, Niigata 944-0101 (JP)**

(72) Inventor: **MOCHIZUKI Noriaki**
**Tokyo 115-8588 (JP)**

(74) Representative: **Gille Hrabal**
**Brucknerstrasse 20**
**40593 Düsseldorf (DE)**

(54) **POLARIZING ELEMENT AND POLARIZING PLATE**

(57) [Object] A polarizing element and polarizing plate having improved optical properties and durability.

[Solution] A polarizing element characterized in comprising a polyvinyl alcohol resin film adsorbing at least one dichromatic pigment that is a compound represented by formula (I) or a salt thereof as a free acid, and being streched, wherein the polyvinyl alcohol resin has a degree of polymerization of 5,000 to 10,000:

[Formula 1]

FORMULA (I)

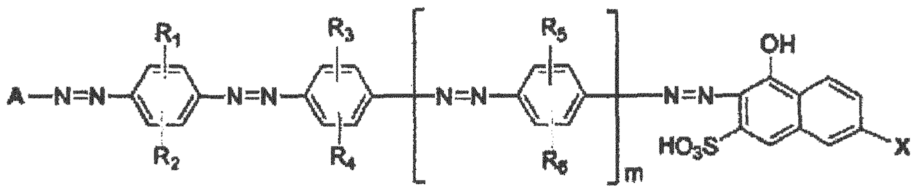

(wherein A represents a phenyl group or a naphthyl group having a substituent; $R_1$-$R_6$ each independently represent a hydrogen atom, a hydroxyl group, a lower alkyl group, a lower alkoxy group, a sulfo group, or a lower alkoxy group having a sulfo group; X represents an amino group optionally having a substituent, a benzoylamino group optionally having a substituent, a phenylamino group optionally having a substituent, a phenylazo group optionally having a substituent, or a naphthotriazole group optionally having a substituent; and m represents 0 or 1).

EP 2 752 694 A1

## Description

### TECHNICAL FIELD

The present invention relates to a dye-based polarizing element and a polarizing plate.

### BACKGROUND ART

A polarizing element is generally manufactured by adsorbing and orienting iodine or a dichromatic dye which is a dichromatic pigment on a polyvinyl alcohol resin film. A protective film of triacetyl cellulose or the like is bonded to at least one side of the polarizing element via an adhesive to form a polarizing plate, which is used in an LCD device or the like. A polarizing plate using iodine as a dichromatic pigment is referred to as an iodine-based polarizing plate, and a polarizing plate using a dichromatic dye as a dichromatic pigment is referred to as a dye-based polarizing plate. Of these, dye-based polarizing plates are characterized in having high heat resistance, high humidity durability, and high stability, as well as high color selectivity according to the formulation thereof, but are problematic in that they exhibit lower levels of transmission, i.e., lower contrast, compared to iodine-based polarizing plates having the same level of polarization. Thus, there is a demand for a polarizing plate that maintains high durability, exhibits diverse color selectivity, and has high transmission and high polarization properties.

### PRIOR ART REFERENCES

### PATENT REFERENCES

Patent Reference 1: Japanese Patent Laying-open 2005-171231
Patent Reference 2: Japanese Patent Application laying-open 2007-238888
Patent Reference 3: Japanese Patent Application Laying-open 2008-120868
Patent Reference 4: Japanese Patent Application Laying-open 2009-14873
Patent Reference 5: Japanese Patent Application Laying-open H01-105204
Patent Reference 6: Japanese Patent Application Laying-open H03-175404
Patent Reference 7: Japanese Patent Application Laying-open 2004-075719

### NON-PATENT REFERENCES

Non-Patent Reference 1: Senryo Kagaku, HOSODA, Yutaka (Gihodo)

### SUMMARY OF THE INVENTION

### PROBLEMS TO BE SOLVED BY THE INVENTION

In connection with improving the optical properties of dye-based polarizing plates, techniques of improving optical properties via the structure of the dichromatic pigment have been disclosed in, for example, Patent References 1-3. Patent Reference 4 discloses a technique of improving optical properties via polarizing element machining conditions, and Patent References 5 and 6 disclose techniques of improving optical properties by using a highly polymerized polyvinyl alcohol film or improving substituents of film. However, the techniques disclosed in the abovementioned references are difficult to industrialize, and there remains a high demand for a polarizing plate having even higher transmission and high contract, as well as for further improvement in optical properties. The industrial manufacture of polarizing films from highly polymerized polyvinyl alcohol resins requires the optimization of the physical properties of the polyvinyl alcohol resin film, the polarizing film manufacturing conditions, and the dichromatic pigment used in the polarizing element.

As the result of dedicated research into solving the problems described above, the inventors discovered that a polarizing element comprising an azo compound-based dichromatic pigment and a polyvinyl alcohol resin film having a specific molecular weight improves optical properties, and improves durability against light, heat, and humidity.

Specifically, the present invention relates to:

(1) a polarizing element characterized in comprising a polyvinyl alcohol resin film adsorbing at least one dichromatic pigment that is a compound represented by formula (I) or a salt thereof as a free acid and being stretched, wherein the polyvinyl alcohol resin has a degree of polymerization of 5,000 to 10,000:

[Formula 1]

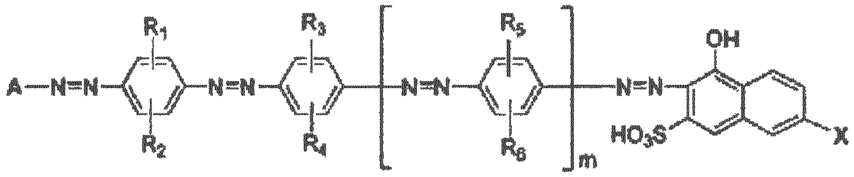

FORMULA (I)

(wherein A represents a phenyl group or a naphthyl group having a substituent; $R_1$-$R_6$ each independently represent a hydrogen atom, a hydroxyl group, a lower alkyl group, a lower alkoxy group, a sulfo group, or a lower alkoxy group having a sulfo group; X represents an amino group optionally having a substituent, a benzoylamino group optionally having a substituent, a phenylamino group optionally having a substituent, a phenylazo group optionally having a substituent, or a naphthotriazole group optionally having a substituent;
and m represents 0 or 1);
(2) the polarizing element according to (1), characterized in that, when m = 0 in formula (I), A is represented by formula (II) :

[Formula 2]

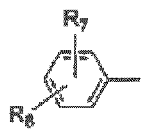

FORMULA(II)

(wherein one of $R_7$ and $R_8$ is a sulfo group, and the other represents a hydrogen atom, sulfo group, lower alkyl group, carboxyl group, or lower alkoxy group);
(3) the polarizing element according to (1), characterized in that, when m = 0 in formula (I), X is a naphthotriazole group optionally having a substituent and is a transition metal complex or a salt thereof of the compound represented by formula (1);
(4) the polarizing element according to (1), characterized in that, when m = 1 in formula (I), A is a naphthyl group comprising at least one substituent, at least one substituent of the naphthyl group being a sulfo group, and the other substituent(s) being a hydroxy group or a sulfo-group-comprising lower alkoxy group;
(5) the polarizing element according to (1), characterized in that, when m = 1 in formula (I), A is a phenyl group comprising at least one substituent, at least one substituent of the phenyl group being a sulfo group, and the other substituent(s) being a sulfo group, a lower alkyl group, a lower alkoxy group, a lower alkoxy group having a sulfo group, a carboxy group, a nitro group, an amino group, or a substituted amino group;
(6) the polarizing element according to any one of (1) to (5), characterized in that X is a benzoylamino group optionally having a substituent, a phenylamino group optionally having a substituent, a phenylazo group optionally having a substituent, or a naphthotriazole group optionally having a substituent, the substituents thereof being a lower alkyl group, a lower alkoxy group, a hydroxy group, a carboxy group, a sulfo group, an amino group, or a substituted amino group;
(7) the polarizing element according to any one of (1) to (6), characterized in that the dichromatic pigment is a compound represented by the following formula (III) or a salt thereof:

[Formula 3]

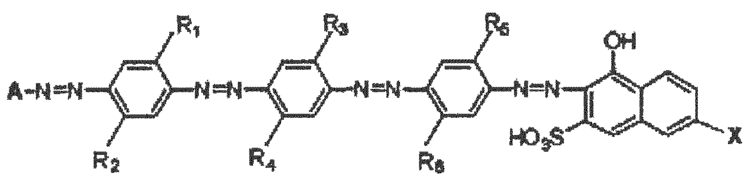

FORMULA (III)

(wherein $R_1$-$R_6$ each independently represent a hydrogen atom, a methyl group, a methoxy group, a sulfo group, or a lower alkoxy group having a sulfo group);

(8) the polarizing element according to any one of (1) to (7), characterized in that the element is obtained using a feedstock film having a swelling level of 200% to 240%;

(9) the polarizing element according to any one of (1) to (7), characterized in that the element is obtained using a feedstock film having a swelling level of 200% to 210%;

(10) a polarizing plate in which a transparent protective layer is provided on at least one side of the polarizing element according to any one of (1) to (9);

(11) an LCD device comprising the polarizing element according to any one of (1) to (9) or the polarizing plate according to (10); and

(12) a liquid crystal projector comprising the polarizing element according to any one of (1) to (9) or the polarizing plate according to (10).

ADVANTAGES OF THE INVENTION

The polarizing element or polarizing plate of the present invention provides improved optical properties, and improved durability to light, heat, and humidity.

BEST MODE FOR CARRYING OUT THE INVENTION

The polarizing element according to the present invention is constituted by a polyvinyl alcohol resin film adsorbing at least one dichromatic pigment that is a compound represented by formula (I) or a salt thereof as a free acid and being stretched, wherein the polyvinyl alcohol resin has a degree of polymerization of 5,000 to 10,000.

[Formula 4]

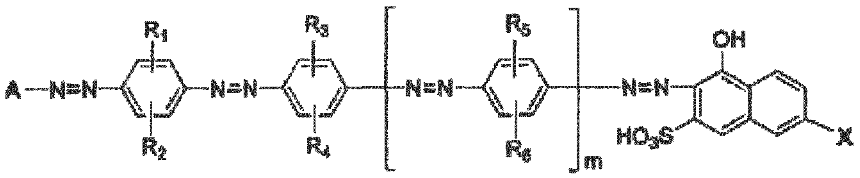

FORMULA (I)

(wherein A represents a phenyl group or a naphthyl group having a substituent; $R_1$-$R_6$ each independently represent a hydrogen atom, a hydroxyl group, a lower alkyl group, a lower alkoxy group, a sulfo group, or a lower alkoxy group having a sulfo group; X represents a amino group optionally having a substituent, a benzoylamino group optionally having a substituent, a phenylamino group optionally having a substituent, a phenylazo group optionally having a substituent, or a naphthotriazole group optionally having a substituent; and m represents 0 or 1);

A method of preparing the polarizing element according to the present invention will be described hereafter.

There is no particular restriction upon the method to produce the polyvinyl alcohol resin which constitutes the polarizing element according to the present invention; a known method can be used to produce the resin. For example, the polyvinyl alcohol resin used in the present invention can be produced by saponifying a polyvinyl ester polymer obtained by polymerizing a vinyl ester. Examples of vinyl esters include vinyl acetate, vinyl formate, vinyl propionate, vinyl butyrate, vinyl pivalate, vinyl versate, vinyl laurate, vinyl stearate, and vinyl benzoate, one or more of which can be selected. Of these, vinyl acetate is preferable. There is no particular restriction upon the polymerization temperature, but, if methanol is used as a polymerization solvent, a temperature around 60°C is preferable, as the boiling point of methanol is near 60°C. The polyvinyl alcohol resin is not limited to a saponified homopolymer of a vinyl ester as long as the effects of the present invention are not negatively affected. For example, it is also acceptable to use a polyvinyl acetal-based polymer such as one in which formalin, butyraldehyde, benzaldehyde, or another aldehyde is used to crosslink some of the PVA hydroxyl groups in a saponified product (1) of a modified polyvinyl ester copolymerized at a proportion of less than 15 mol% with an unsaturated carboxylic acid or a derivative thereof, an unsaturated sulfonic acid or a derivative thereof, an alpha-olefin having 2-30 carbon atoms, or the like; or a modified polyvinyl alcohol vinyl ester in which an unsaturated carboxylic acid or a derivative thereof, an unsaturated sulfonic acid or a derivative thereof, an alpha-olefin having 2-30 carbon atoms, or the like is graft-copolymerized at a proportion of less than 5 mol% to a polyvinyl alcohol resin.

The degree of saponification of the polyvinyl alcohol resin is preferably at least 99 mol%, more preferably at

least 99.5 mol%. A degree of saponification of less than 99 mol% is not preferable, as the polyvinyl alcohol will readily elute, leading to the risks of in-plane irregularities in optical properties, reductions in dye affinity during dyeing steps, breakage during drawing steps, and dramatic reductions in productivity.

In order to improve the optical properties of the present invention, the polyvinyl alcohol resin must have a degree of polymerization of 5,000 to 10,000, preferably at least 5,500. If the degree of polymerization of the polyvinyl alcohol resin is less than 5,000, there will be difficulties in obtaining high polarization performance. If the degree of polymerization exceeds 10,000, the resin will become harder, reducing film formation ability, drawability, and productivity; thus, a degree of polymerization of no more than 10,000 is preferable from an industrial point of view.

The "degree of polymerization of the polyvinyl alcohol resin" refers to the viscosity-average degree of polymerization, and can be calculated according to a method that is well known in the art. For example, the viscosity-average degree of polymerization can be calculated according to the following method.

0.28 g of polyvinyl alcohol resin was dissolved in 70 g distilled water at 95°C to prepare a 0.4% aqueous polyvinyl alcohol solution, which was cooled to 30°C. The solution was cooled in a 30°C constant-temperature water bath to create a polymerization measurement sample. 10 mL of the polymerization measurement sample was dried for 20 hours in an evaporating dish within a dryer at 105°C, and the post-drying weight [$\alpha$ (g)] of the polymerization measurement sample was measured. The concentration C (g/L) of the polymerization measurement sample was calculated according to formula (i).

$$C = 1000 \times \alpha/10 \quad \text{Formula (i)}$$

The polymerization measurement sample or distilled water was introduced into an Ostwald viscometer using a 10 mL hole pipette, and stabilized for 15 minutes in a 30°C constant-temperature water bath. The settling time t1 (sec) of the introduced polymerization measurement sample and the settling time t0 (sec) of the distilled water were measured, and the viscosity-average degree of polymerization E was calculated using formulas (ii) through (iv).

$$\eta t = t_1/t_0 \quad \text{Formula (ii)}$$

$$\eta = 2.303 \times \mathrm{Log}(\eta t/c) \quad \text{Formula (iii)}$$

$$\mathrm{Log}(E) = 1.613 \times \mathrm{Log}([\eta] \times 104/8.29) \quad \text{Formula (iv)}$$

The polyvinyl alcohol resin obtained as described above can be formed into a film to obtain a film feedstock. Non-limiting examples of film formation methods include melt-extruding a hydrous polyvinyl alcohol resin, along with film casting, wet film formation (expulsion into a poor solvent), gel film formation (chill-gelling an aqueous polyvinyl alcohol resin solution, following by extracting and removing the solvent), film casting (pouring an aqueous polyvinyl alcohol resin solution onto a base, followed by drying), and combinations of these methods.

Non-limiting examples of the solvent used in forming the film include one or more of dimethyl sulfoxide, dimethyl formamide, dimethyl acetamide, N-methyl pyrrolidone, ethylene glycol, glycerol, propylene glycol, diethylene glycol, triethylene glycol, tetraethylene glycol, trimethylol propane, ethylenediamine, diethylenetriamine, and water. The amount of solvent used to form the film is preferably from 70 to 95 mass% of the total film formation stock solution, but is not restricted thereto. However, if the amount of solvent is less than 50 mass%, the viscosity of the film formation stock solution will increase, impeding filtration and degassing during preparation, and making it difficult to obtain a film feedstock free of foreign matter or defects. If the amount of solvent is greater than 95 mass%, the viscosity of the film formation stock solution will be too low, inhibiting the desired thickness control, increasing the effects of wind surface ripples during drying and drying time, and reducing productivity.

A plasticizer is optionally used to manufacture the film feedstock. Non-limiting examples of Plasticizers include glycerol, diglycerol, ethylene glycol, propylene glycol, and low-molecular-weight polyethylene glycol. There is no particular restriction upon the amount of plasticizer used; normally, an amount in a range of 5-15 parts by mass per 100 parts by mass polyvinyl alcohol resin is suitable.

Non-limiting examples of methods of drying the film feedstock following film formation include hot-air drying, contact drying using a heated roller, and infrared heater drying. One of these methods may be used in isolation, or a combination of two or more may be used. Similarly, there is no particular restriction upon the drying temperature, but a temperature in a range of 50-70°C is preferable.

Thermal treatment is preferably performed in order to keep the swelling of the dried film feedstock within a predetermined range to be described hereafter. Examples of the method of thermally treating the film feedstock following film formation include hot air, contact with a heated roller, and the like; there is no particular restriction as long as thermal treatment is possible. One of these methods may be used in isolation, or a combination of two or more may be used. There is no particular restriction upon the thermal treatment temperature and time; a range of 110-140°C is preferable, and treatment is preferably performed for 1-10 minutes, but the invention is not particularly restricted to such conditions.

The thickness of the film feedstock so obtained is preferably 20-100 μm, more preferably 20-80 μm, and still more preferably 20-60 pm. If the thickness is less than 20 μm, the film will be prone to tearing. If the thickness exceeds 100 μm, the stress upon the film during drawing will increase, the mechanical load during drawing steps will increase, and largescale machinery will be necessary to withstand the load.

The feedstock film obtained as described above is next subjected to a swelling step.

The swelling step is performed by immersing the polyvinyl alcohol resin film in a 20-50°C solution for from 30 seconds to 10 minutes. The solution is preferably water. In order to reduce the time necessary to manufacture the polarizing element, the swelling step can be omitted, as swelling will also occur during pigment dyeing.

The swelling level F of the film feedstock is preferably 200-240%, more preferably 200-230%, and still more preferably 200-210%. A swelling level of 200-210% is especially preferable, as this will improve the durability of the obtained polarizing element. If the swelling level F is less than 200%, there will be little elongation during drawing and the possibility of tearing at low elongation rates will increase, impeding sufficient drawing. If the swelling level F exceeds 240%, swelling will be excessive, causing wrinkles and slack and leading to breakage during drawing. To control the swelling level F, the temperature and time of the thermal treatment performed upon the film feedstock following film formation can be adjusted, for example, to yield a suitable swelling level F.

A method well known in the art can be used to measure the swelling level F of the film feedstock, an example of which is as follows.

The film feedstock was cut to 5 × 5 cm, and immersed for four hours in 1 liter of 30°C distilled water. The immersed film was removed from the distilled water and sandwiched between two sheets of filter paper to absorb any water drops on the surface, after which the weight [β (g)] of the film having been immersed in the water was measured. After having been immersed and having the water drops on its surface absorbed, the film was dried for 20 hours in a dryer at 105°C and cooled for 30 minutes in a desiccator, after which the weight [γ (g)] of the dried film was measured, and the swelling level F of the film feedstock was calculated according to formula (v).

$$\text{Swelling level F} = 100 \times \beta/\gamma\ (\%) \quad \text{Formula (v)}$$

After the swelling step, a dyeing step is performed. In the present invention, the pigment represented by formula (I) can be adsorbed to the polyvinyl alcohol film in the dyeing step. There is no particular limitation upon the dyeing step as long as the method involves adsorbing the pigment onto the polyvinyl alcohol film; for example, the dyeing step can be performed by immersing the polyvinyl alcohol resin film in a solution containing a dichromatic dye. The temperature of the solution used in this step is preferably 5-60°C, more preferably 20-50°C, and especially preferably 35-50°C. The immersion time within the solution can be adjusted as appropriate, with from 30 seconds to 20 minutes being preferable, and 1-10 minutes being more preferable. The dyeing method preferably involves immersion in the solution, but it is also possible to apply the solution to the polyvinyl alcohol resin film.

The dichromatic dye-containing solution can contain sodium carbonate, sodium bicarbonate, sodium chloride, sodium sulfate, anhydrous sodium sulfate, sodium tripolyphosphate, or the like as a dyeing aid. The respective amounts thereof contained can be adjusted as desired according to the dye affinity according to time and temperature, with amounts of 0-5% by weight being preferable, and 0.1-2% by weight being more preferable.

Apart from the azo compound which is a dichromatic pigment represented by formula (I), the pigment used during the dyeing step may also be a salt of the compound.

In formula (I), when m = 0, i.e., when the azo compound has a tris-azo structure, A is preferably a structure represented by formula (II), as this will allow for greater improvement in optical properties. At least one sulfo group is preferably comprised as a substituent. If there are two or more substituents, at least one thereof is preferably a sulfo group, and as the other substituent(s) a sulfo group, lower alkyl group, lower alkoxy group, lower alkoxy group having a sulfo group, carboxyl group, nitro group, amino group, or substituted amino group is preferable. A methoxy group, ethoxy group, carboxyl group, nitro group, or amino group is more preferable, and a lower alkyl group or lower alkoxy group is especially preferable. In the case of a lower alkoxy group having a sulfo group, a straight chain alkoxy is preferable, the substitution site of the sulfo group is preferably at the alkoxy group terminal, a 3-sulfopropoxy group or a 4-sulfobutoxy group is more preferable, and a 3-sulfopropoxy group is especially preferable. The number of substituents is preferably two. A combination of a 2- substitution site and a 4- substitution site is preferable, but the present invention

is not particularly limited to such.

[Formula 5]

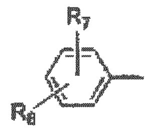

FORMULA (II)

(wherein one of $R_7$ and $R_8$ is a sulfo group, and the other represents a hydrogen atom, sulfo group, lower alkyl group, carboxyl group, or lower alkoxy group)

In formula (I), when m = 0, i.e., when the azo compound has a tris-azo structure, and A is a phenyl group, A represents a naphthyl group having a substituent. At least one sulfo group is preferably comprised as a substituent. There is no particular limitation upon the number of sulfo groups as long as there is at least one, but two or three is preferable. The other substituent is preferably a hydroxy group, carboxyl group, or a lower alkoxy group having a sulfo group.

In formula (I), when m = 1, i.e., when the azo compound has a tetrakis structure, and A is a naphthyl group, at least one substituent is preferably comprised, at least one of which is preferably a sulfo group. There is no particular limitation upon the number of sulfo groups as long as there is at least one, but two or three is preferable. The other substituent is preferably a hydroxy group, carboxyl group, or lower alkoxy group having a sulfo group.

In formula (I), when m = 1, i.e., when the azo compound has a tetrakis structure, and A is a phenyl group, A represents a phenyl group having a substituent. At least one sulfo group is preferably comprised as a substituent. If there are two or more substituents, at least one thereof is preferably a sulfo group, and as the other substituent(s) a sulfo group, lower alkyl group, lower alkoxy group, lower alkoxy group having a sulfo group, carboxyl group, nitro group, amino group, or substituted amino group is preferable. A sulfo group, methyl group, ethyl group, methoxy group, ethoxy group, carboxyl group, nitro group, or amino group is more preferable, and a sulfo group, lower alkyl group, or lower alkoxy group is especially preferable. In the case of a lower alkoxy group having a sulfo group, a straight chain alkoxy is preferable, the substitution site of the sulfo group is preferably at the alkoxy group terminal, a 3-sulfopropoxy group or a 4-sulfobutoxy group is more preferable, and a 3-sulfopropoxy group is especially preferable. The number of substituents is preferably two, and, while there is no particular limitation upon the substitution site, a combination of a 2- site and a 4- site is preferable.

In formula (I), X represents a benzoylamino group optionally having a substituent, a phenylamino group optionally having a substituent, a phenylazo group optionally having a substituent, or a naphthotriazole group optionally having a substituent. If X is a benzoylamino group optionally having a substituent, a phenylamino group optionally having a substituent, or a phenylazo group optionally having a substituent, the substituent thereof is preferably a lower alkyl group, a lower alkoxy group, a hydroxy group, a carboxyl group, a sulfo group, an amino group, or a substituted amino group. If X is a naphthotriazole group optionally having a substituent, the substituent thereof is preferably a sulfo group. If X is a phenylamino group optionally having a substituent, the substituent thereof is preferably a methyl group, a methoxy group, an amino group, a substituted amino group, or a sulfo group, with there being no particular limitation upon the substitution site, although it is preferably a p site. If X is a benzoylamino group having a substituent, the substituent is preferably an amino group, a substituted amino group, or a hydroxy group, especially preferably an amino group. There is no particular limitation upon the substitution site, although it is preferably a p site. If X is a phenylazo group having a substituent, the substituent is preferably a hydroxy group, an amino group, a methyl group, a methoxy group, or a carboxyl group, especially preferably a hydroxy group. In all of the cases described above, there may be two or more substituents, which may be identical or different.

In order to further improve optical properties, the pigment represented by formula (I) preferably has a structure such as that shown in formula (III). $R_1$ through $R_6$ independently represent a hydrogen atom, lower alkyl group, lower alkoxy group, sulfo group, or lower alkoxy group having a sulfo group; preferably a hydrogen atom, methyl group, ethyl group, methoxy group, ethoxy group, or sulfo group. If a lower alkoxy group having a sulfo group, the group is a straight chain alkoxy, the substitution site of the sulfo group being the alkoxy group terminal, with a 3-sulfopropoxy group or a 4-sulfobutoxy group being more preferable. A hydrogen atom, methyl group, methoxy group, or 3-sulfopropoxy group is especially preferable. Preferable substitution sites include a 2- site only, a 5- site only, a combination of a 2- site and a 6- site, a combination of a 2- site and a 5- site, or a combination of a 3- site and a 5- site, with a 2- site only, a 5- site only, or a combination of a 2- site and a 5- site being especially preferable.

[Formula 6]

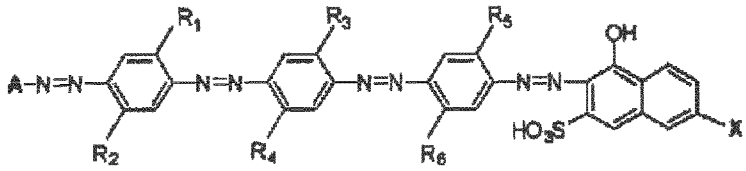

FORMULA (III)

A polarizing element using a polyvinyl alcohol resin film having a degree of polymerization of 5,000 to 10,000 obtained using pigments represented by formulas (1) and (III) above will exhibit greatly improved optical properties. In the case of lower alkyl groups, lower alkoxy groups, and lower alkoxy groups having a sulfo group, "lower" refers to an alkyl group or alkoxy group comprising 1-5 carbon atoms.

Next, specific examples of azo compound represented by formula (I) used in the present invention will be given. In the formulas, sulfo groups, carboxy groups, and hydroxy groups are shown in the form of free acids.

[Formula 7]

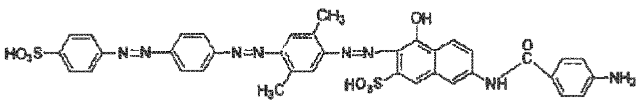

(EXAMPLE COMPOUND 1)

[Formula 8]

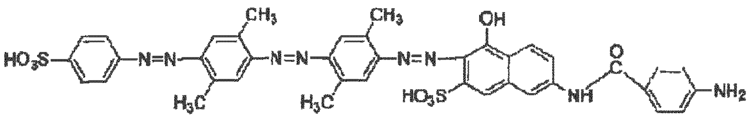

(EXAMPLE COMPOUND 2)

[Formula 9]

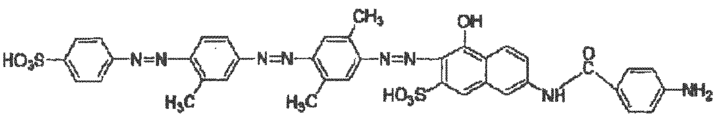

(EXAMPLE COMPOUND 3)

[Formula 10]

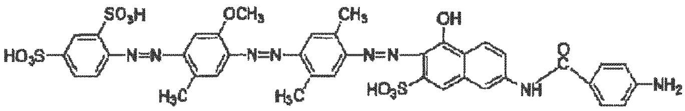

(EXAMPLE COMPOUND 4)

[Formula 11]

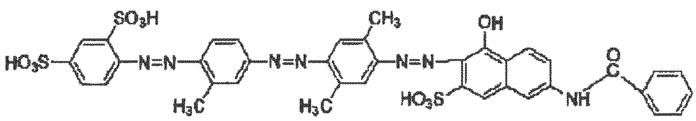

(EXAMPLE COMPOUND 5)

[Formula 12]

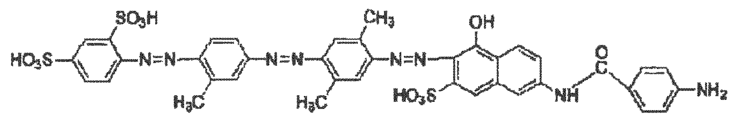

(EXAMPLE COMPOUND 6)

[Formula 13]

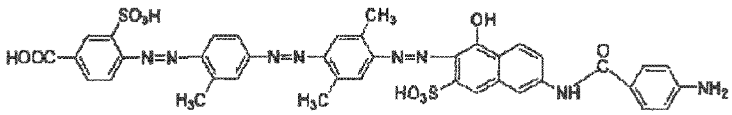

(EXAMPLE COMPOUND 7)

[Formula 14]

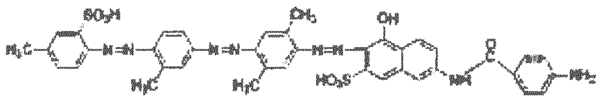

(EXAMPLE COMPOUND 8)

[Formula 15]

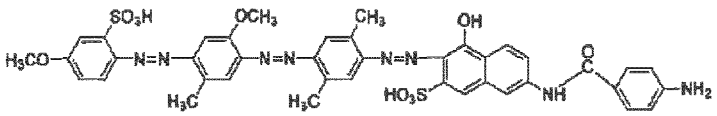

(EXAMPLE COMPOUND 9)

[Formula 16]

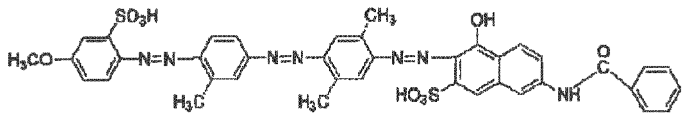

(EXAMPLE COMPOUND 10)

[Formula 17]

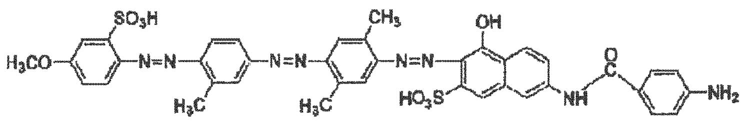

(EXAMPLE COMPOUND 11)

[Formula 18]

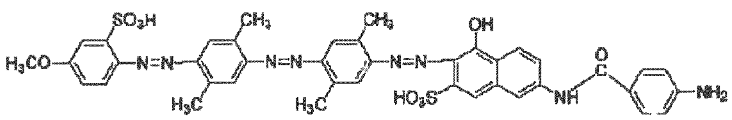

(EXAMPLE COMPOUND 12)

[Formula 19]

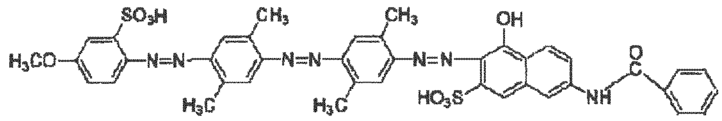

(EXAMPLE COMPOUND 13)

[Formula 20]

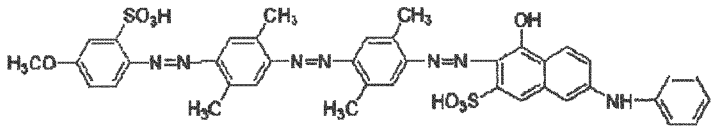

(EXAMPLE COMPOUND 14)

[Formula 21]

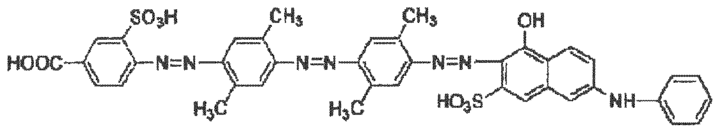

(EXAMPLE COMPOUND 15)

[Formula 22]

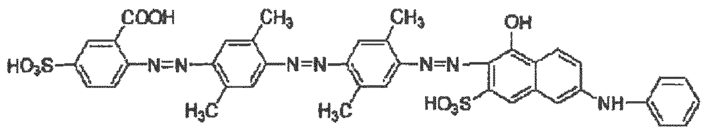

(EXAMPLE COMPOUND 16)

[Formula 23]

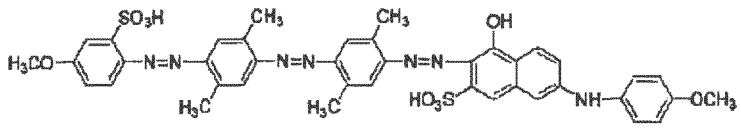

(EXAMPLE COMPOUND 17)

[Formula 24]

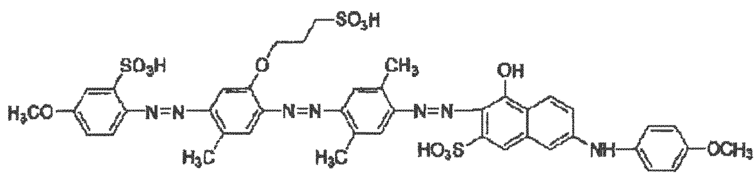

(EXAMPLE COMPOUND 18)

[Formula 25]

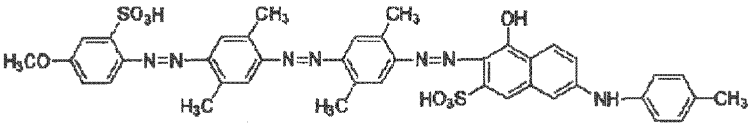

(EXAMPLE COMPOUND 19)

[Formula 26]

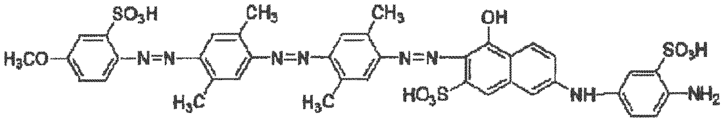

(EXAMPLE COMPOUND 20)

[Formula 27]

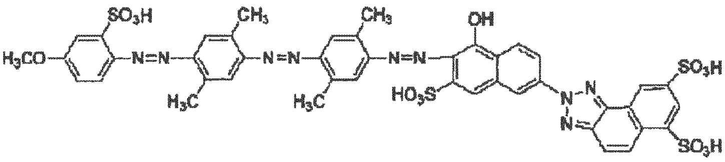

(EXAMPLE COMPOUND 21)

[Formula 28]

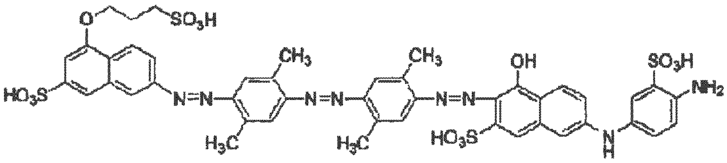

(EXAMPLE COMPOUND 22)

[Formula 29]

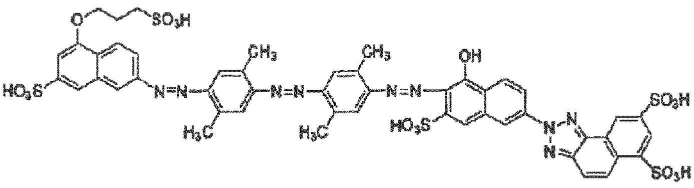

(EXAMPLE COMPOUND 23)

[Formula 30]

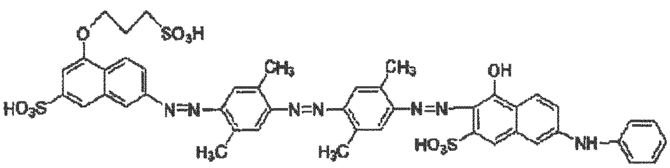

(EXAMPLE COMPOUND 24)

[Formula 31]

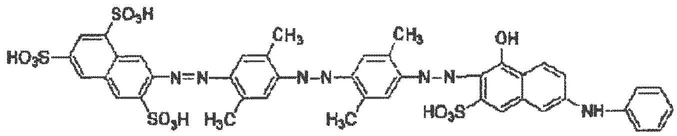

(EXAMPLE COMPOUND 25)

[Formula 32]

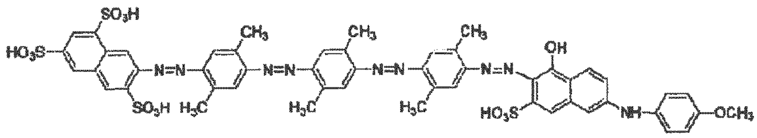

(EXAMPLE COMPOUND 26)

[Formula 33]

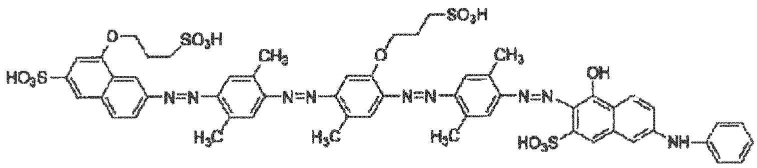

(EXAMPLE COMPOUND 27)

[Formula 34]

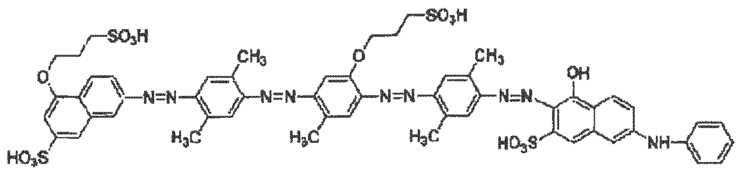

(EXAMPLE COMPOUND 28)

[Formula 35]

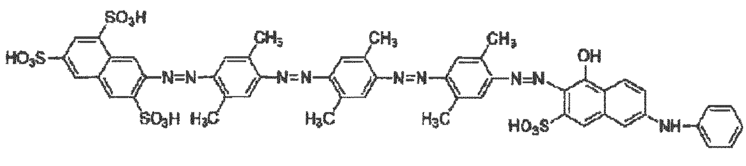

(EXAMPLE COMPOUND 29)

[Formula 36]

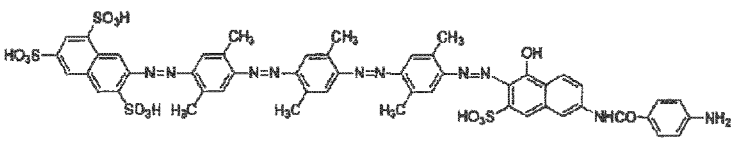

(EXAMPLE COMPOUND 30)

[Formula 37]

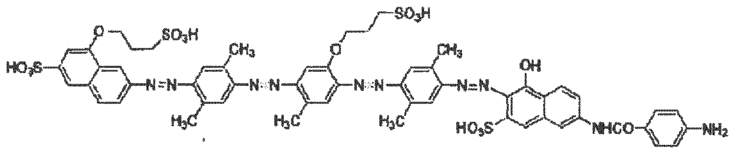

(EXAMPLE COMPOUND 31)

[Formula 38]

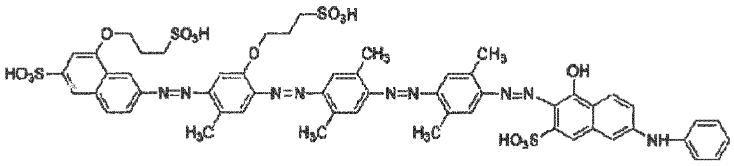

(EXAMPLE COMPOUND 32)

[Formula 39]

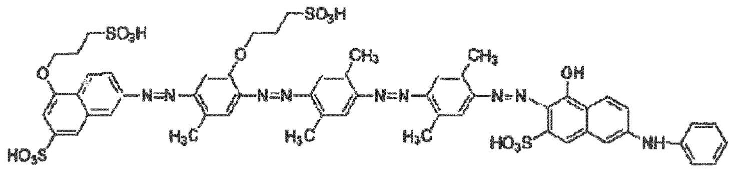

(EXAMPLE COMPOUND 33)

[Formula 40]

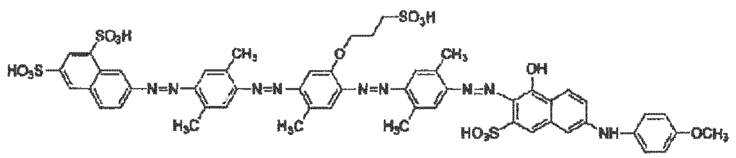

(EXAMPLE COMPOUND 34)

[Formula 41]

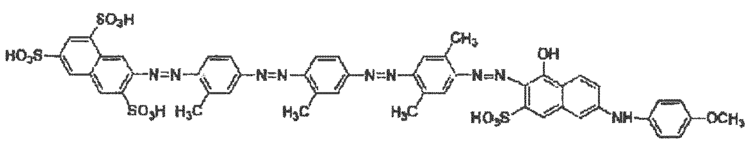

(EXAMPLE COMPOUND 35)

[Formula 42]

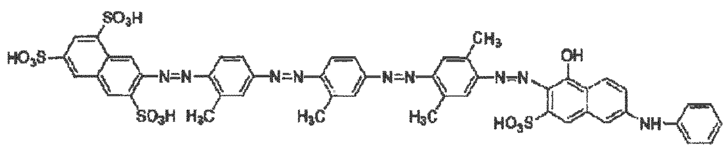

(EXAMPLE COMPOUND 36)

[Formula 43]

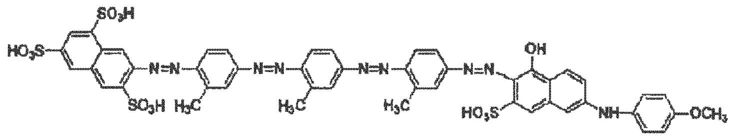

(EXAMPLE COMPOUND 37)

[Formula 44]

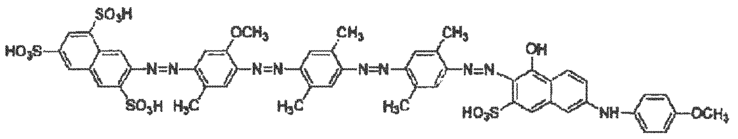

(EXAMPLE COMPOUND 38)

[Formula 45]

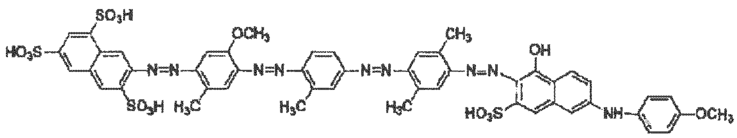

(EXAMPLE COMPOUND 39)

[Formula 46]

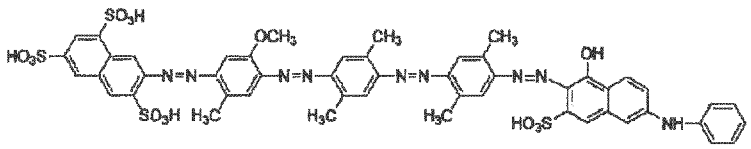

(EXAMPLE COMPOUND 40)

[Formula 47]

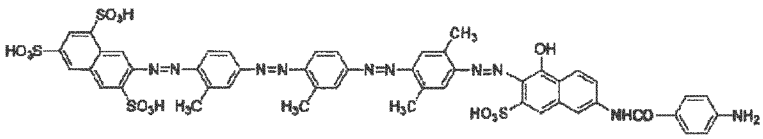

(EXAMPLE COMPOUND 41)

[Formula 48]

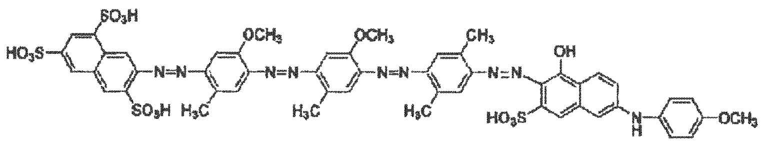

(EXAMPLE COMPOUND 42)

[Formula 49]

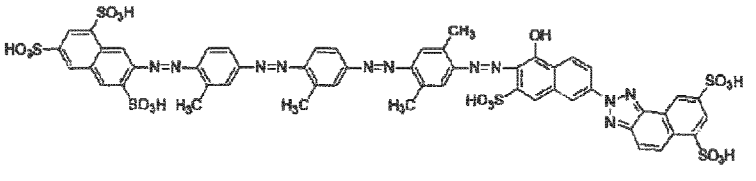

(EXAMPLE COMPOUND 43)

[Formula 50]

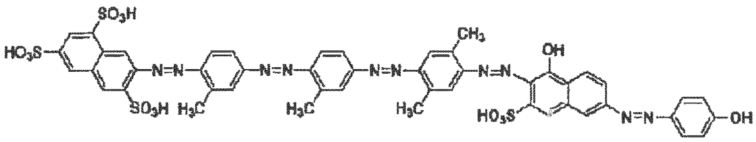

(EXAMPLE COMPOUND 44)

[Formula 51]

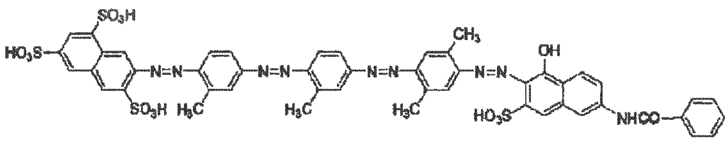

(EXAMPLE COMPOUND 45)

[Formula 52]

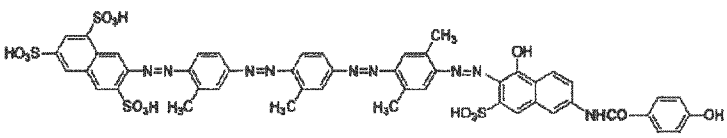

(EXAMPLE COMPOUND 46)

[Formula 53]

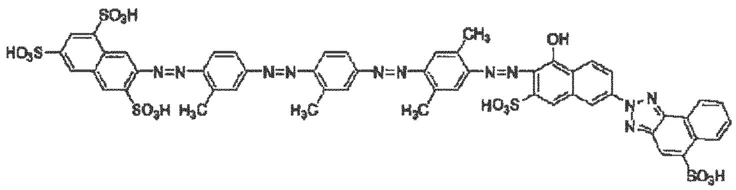

(EXAMPLE COMPOUND 47)

[Formula 54]

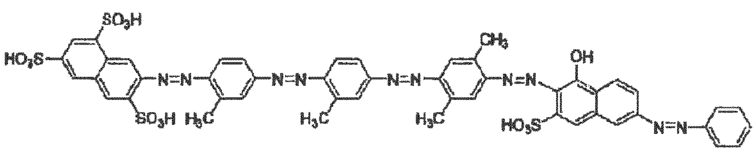

(EXAMPLE COMPOUND 48)

[Formula 55]

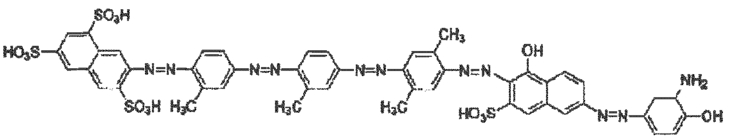

(EXAMPLE COMPOUND 49)

[Formula 56]

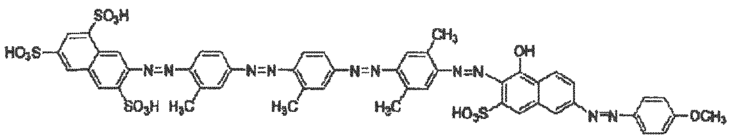

(EXAMPLE COMPOUND 50)

[Formula 57]

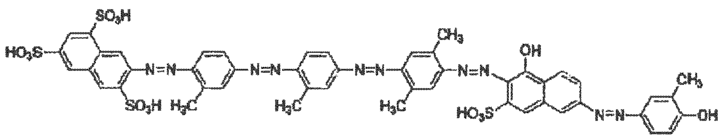

(EXAMPLE COMPOUND 51)

[Formula 58]

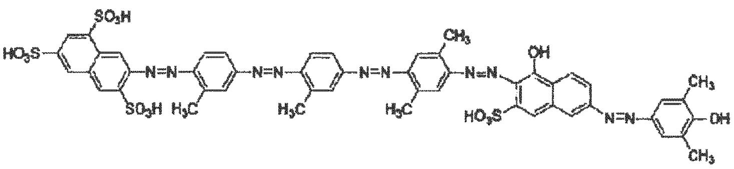

(EXAMPLE COMPOUND 52)

[Formula 59]

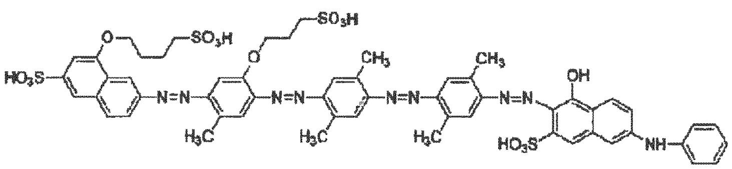

(EXAMPLE COMPOUND 53)

[Formula 60]

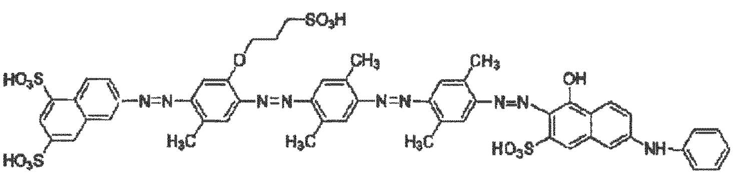

(EXAMPLE COMPOUND 54)

[Formula 61]

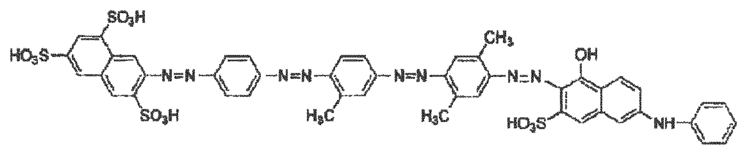

(EXAMPLE COMPOUND 55)

[Formula 62]

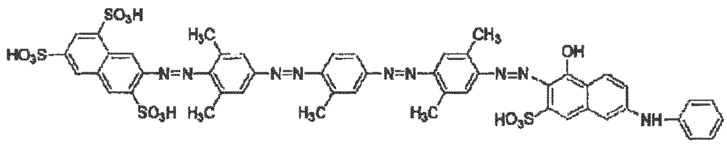

(EXAMPLE COMPOUND 56)

[Formula 63]

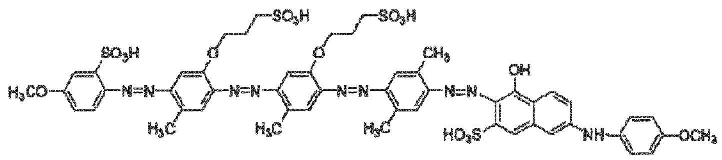

(EXAMPLE COMPOUND 57)

[Formula 64]

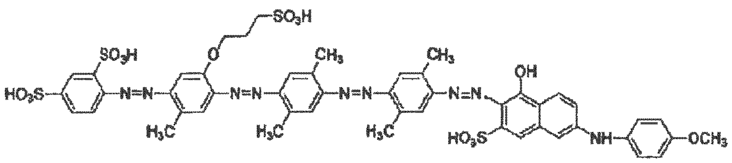

(EXAMPLE COMPOUND 58)

[Formula 65]

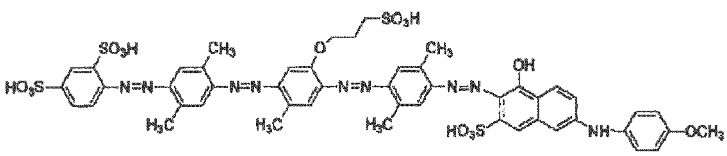

(EXAMPLE COMPOUND 59)

[Formula 66]

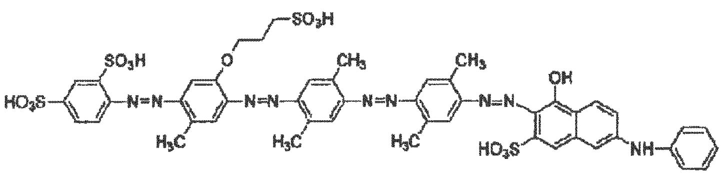

(EXAMPLE COMPOUND 60)

[Formula 67]

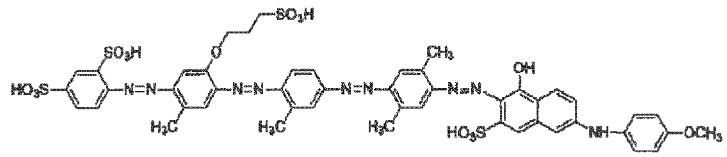

(EXAMPLE COMPOUND 61)

[Formula 68]

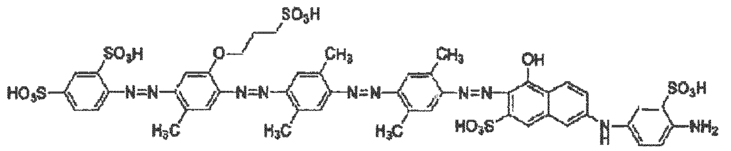

(EXAMPLE COMPOUND 62)

[Formula 69]

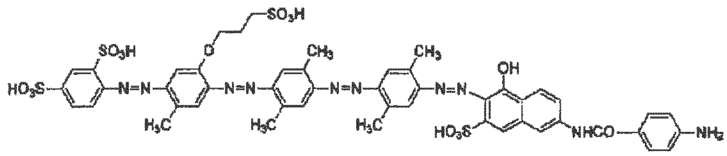

(EXAMPLE COMPOUND 63)

[Formula 70]

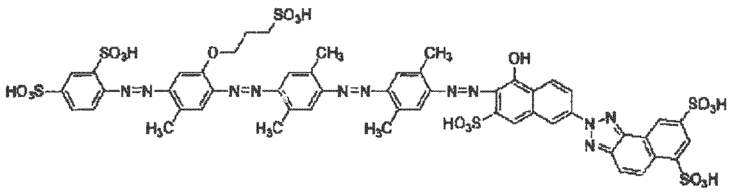

(EXAMPLE COMPOUND 64)

[Formula 71]

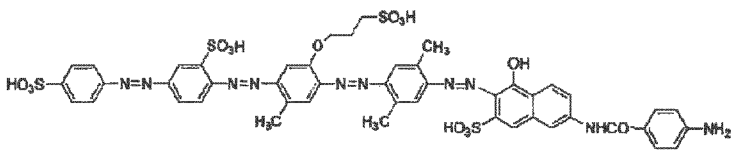

(EXAMPLE COMPOUND 65)

[Formula 72]

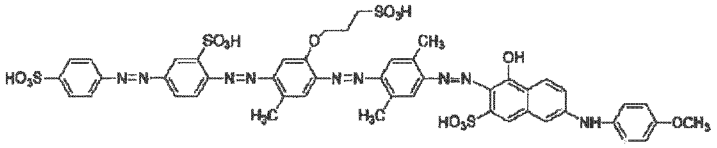

(EXAMPLE COMPOUND 66)

[Formula 73]

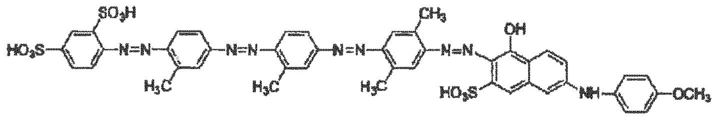

(EXAMPLE COMPOUND 67)

[Formula 74]

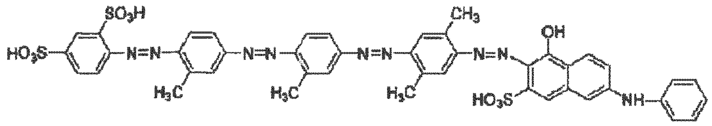

(EXAMPLE COMPOUND 68)

[Formula 75]

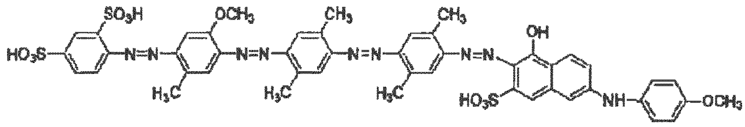

(EXAMPLE COMPOUND 69)

[Formula 76]

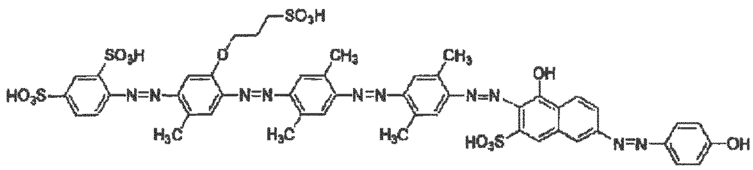

(EXAMPLE COMPOUND 70)

[Formula 77]

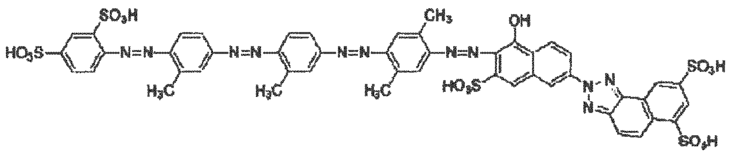

(EXAMPLE COMPOUND 71)

[Formula 78]

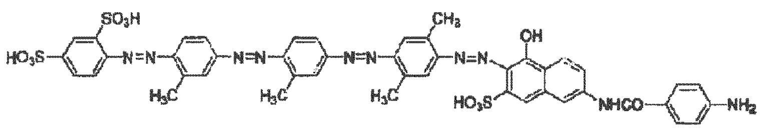

(EXAMPLE COMPOUND 72)

[Formula 79]

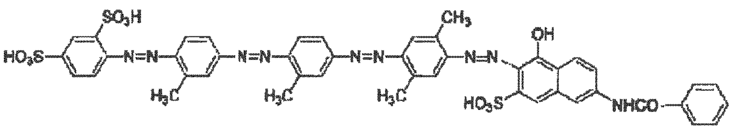

(EXAMPLE COMPOUND 73)

[Formula 80]

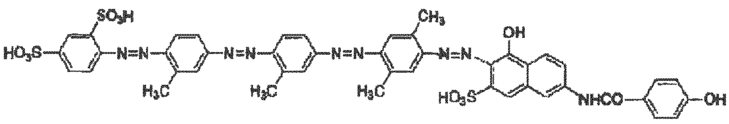

(EXAMPLE COMPOUND 74)

[Formula 81]

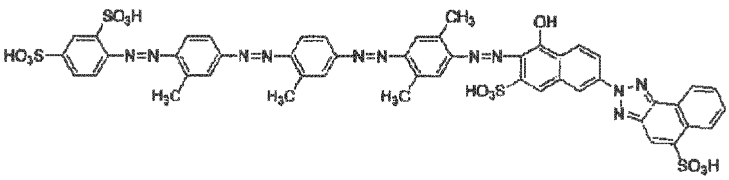

(EXAMPLE COMPOUND 75)

[Formula 82]

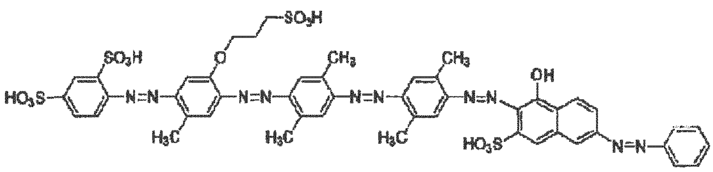

(EXAMPLE COMPOUND 76)

[Formula 83]

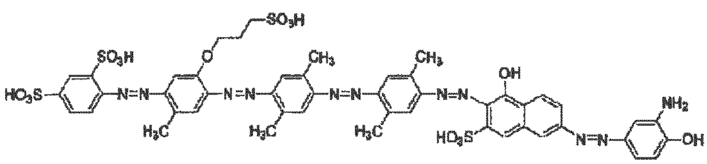

(EXAMPLE COMPOUND 77)

[Formula 84]

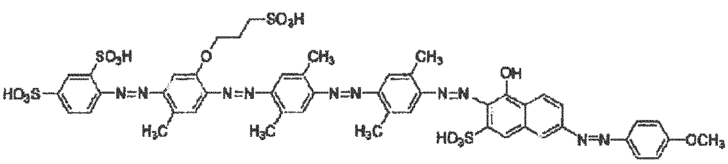

(EXAMPLE COMPOUND 78)

[Formula 85]

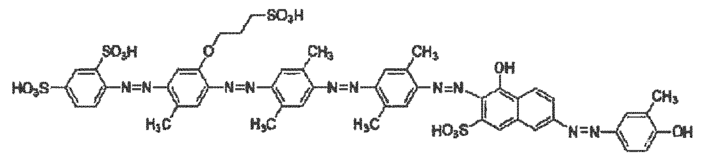

(EXAMPLE COMPOUND 79)

[Formula 86]

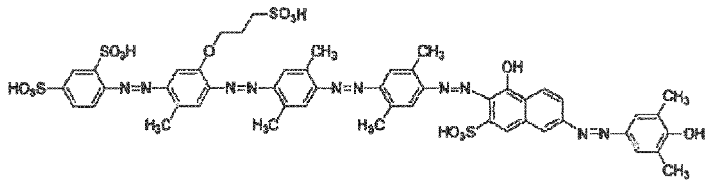

(EXAMPLE COMPOUND 80)

[Formula 87]

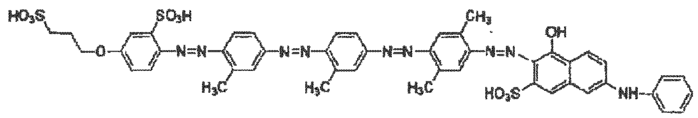

(EXAMPLE COMPOUND 81)

[Formula 88]

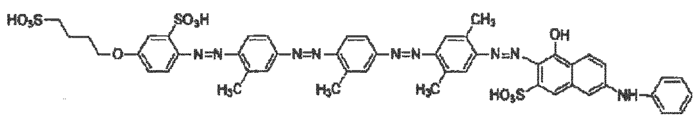

(EXAMPLE COMPOUND 82)

[Formula 89]

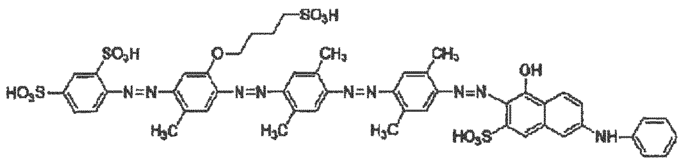

(EXAMPLE COMPOUND 83)

[Formula 90]

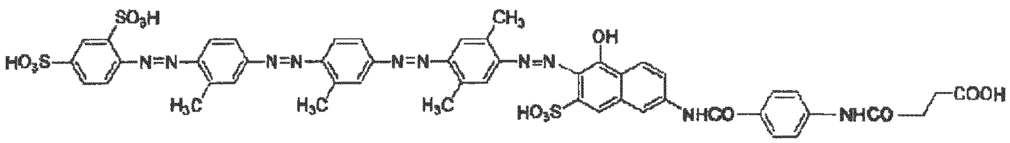

(EXAMPLE COMPOUND 84)

[Formula 91]

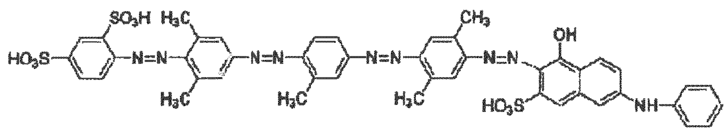

(EXAMPLE COMPOUND 85)

[Formula 92]

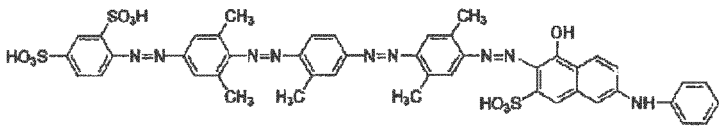

(EXAMPLE COMPOUND 86)

[Formula 93]

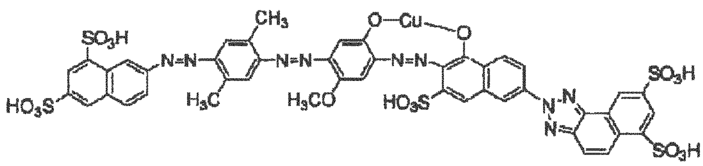

(EXAMPLE COMPOUND 87)

[Formula 94]

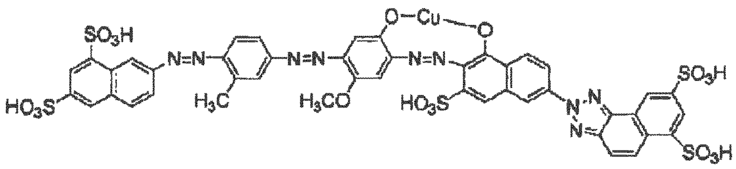

(EXAMPLE COMPOUND 88)

[Formula 95]

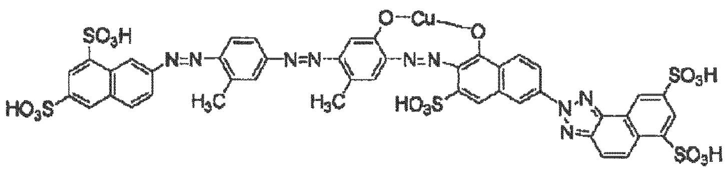

(EXAMPLE COMPOUND 89)

[Formula 96]

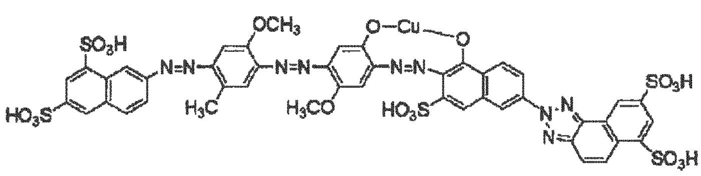

(EXAMPLE COMPOUND 90)

The azo compound represented by formula (I) or a salt thereof can easily be produced via a known diazofication or coupling process according to an ordinary method of producing azo dyes, such as that disclosed in Non-Patent Reference 1.

If A in the compound represented by formula (I) is a phenyl group comprising at least one sulfonic acid group, an aromatic amine represented by formula (IV) or a phenol is sulfoalkylated according to the method disclosed on page 35 of Patent Reference 7 (Japanese Patent Application Laying-open 2004-075719) to obtain sulfoalkoxyanilinic acid, which is diazofied and primary-coupled to an aniline represented by the following formula (A) to obtain a monoazo-amino compound represented by the following formula (B).

[Formula 97]

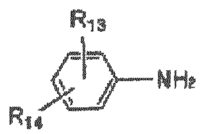

FORMULA (IV)

(wherein, when m = 0, one of $R_{13}$ and $R_{14}$ is a sulfo group and the other represents a hydrogen atom, sulfo group, lower alkyl group, carboxyl group, or lower alkoxy group, and, when m = 1, at least one substituent thereof is a sulfo group, and the other substituent is a sulfo group, lower alkyl group, lower alkoxy group, lower alkoxy group having a sulfo group, carboxyl group, nitro group, amino group, or substituted amino group)

[Formula 98]

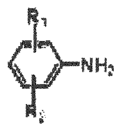

FORMULA (A)

If A in the compound represented by formula (I) is a naphthyl group comprising at least one sulfonic acid group, a naphthylamine sulfonic acid represented by formula (A1) or an amino naphthol sulfonic acid is sulfoalkylated according to the method disclosed on page 35 of Patent Reference 7 to obtain a sulfoalkoxy naphthylamine sulfonic acid, which is diazofied and primary-coupled to an aniline represented by formula (A) to obtain a monoazo-amino compound represented by the following formula (B).

[Formula 99]

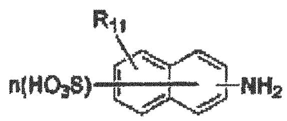

FORMULA (A1)

(wherein $R_{11}$ represents a hydrogen atom, hydroxy group, or lower alkoxy group having sulfo group, and n represents 1-3)

[Formula 100]

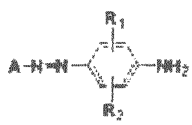

FORMULA (B)

(wherein A, $R_1$, and $R_2$ have the same meanings as in formula (I) above)

Next, the monoazo-amino compound represented by formula (B) is diazofied and secondary-coupled to an aniline represented by the following formula (C) to obtain a disazo-amino compound represented by the following formula (D).

[Formula 101]

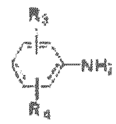

FORMULA (C)

(wherein $R_3$ and $R_4$ have the same meanings as in formula (I) above)

[Formula 102]

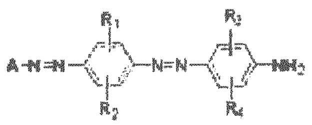

FORMULA (D)

(wherein A, $R_1$, $R_2$, $R_3$, and $R_4$ have the same meanings as in formula (I) above)

If m = 1, the disazo-amino compound represented by formula (D) is diazofied and tertiary-coupled to an aniline represented by the following formula (E) to obtain a trisazo-amino compound represented by the following formula (F).

[Formula 103]

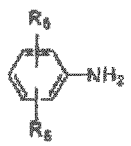

FORMULA (E)

(wherein $R_5$ and $R_6$ have the same meanings as in formula (I) above)

[Formula 104]

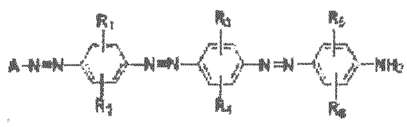

FORMULA (F)

(wherein A, $R_1$, $R_2$, $R_3$, $R_4$, $R_5$, and $R_6$ have the same meanings as in formula (I) above)

The compound of formula (D) can diazofied if m = 0, or the compound of formula (F) if m = 1, and coupled with a naphthol represented by the following formula (G) to obtain an azo compound represented by formula (I).

[Formula 105]

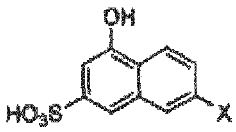

FORMULA (G)

(wherein X has the same meaning as in formula (I) above)

In the reaction described above, the disazofication step is performed according to a normal method by mixing a nitrite, such as sodium nitrite, into an aqueous solution or suspension of a mineral acid, such as hydrochloric acid or sulfuric acid, constituting a disazo component, or according to an inverse method by adding a nitrite to a neutral or weakly alkaline aqueous solution of the disazo component, then mixing with a mineral acid. A disazofication temperature of - 10 to 40°C is suitable. The step of coupling with the aniline is performed by mixing the diazo solutions described above with an acidic aqueous solution of hydrochloric acid, acetic acid, or the like at a temperature of -10 to 40°C and in acidic conditions of pH 2-7.

The monoazo compound, disazo compound, or trisazo compound obtained via coupling can either be used without modification or after having been acid- or salt-precipitated and filtered out, or the process can continue to the next step using the unmodified solution or suspension. If the diazonium salt is poorly soluble and forms a suspension, it may be filtered out and used in the following coupling step in the form of a pressed cake.

For the aniline comprising substituents $R_1$-$R_6$ used in the primary, secondary, and tertiary coupling, specific methods of producing a sulfo group- and alkoxy group-comprising aniline include sulfoalkylating the phenol according to the method disclosed on page 35 of Patent Reference 7 and reducing to obtain a sulfoalkoxy aniline, which can be used in a coupling step.

A quaternary coupling reaction of the diazofied trisazo-amino compound and the naphthol represented by formula (G) is performed at a temperature of -10 to 40°C and neutral or alkaline conditions of pH 7-10. Once the reaction is complete, the product is salted out and filtered. If purification is necessary, salting out may be repeated, or an organic solvent may be used to precipitate the product out. Examples of organic solvents used for purification include alcohols such as methanol or ethanol, ketones such as acetone, and other water-soluble organic solvents.

Examples of the substituents ($R_1$, $R_2$) of the aromatic amine represented in formula (A), which constitutes the starter material for synthesizing the water soluble dye represented by formula (I), include naphthotriazole groups, nitro groups, amino groups, or acetylamino groups with a substituted hydrogen atom, sulfo group, lower alkyl group, lower alkoxy group, lower alkoxy group having a sulfo group, carboxy group, sulfonic acid group, or the like. A hydrogen atom, sulfo group, lower alkyl group, or lower alkoxyl group is preferable, with at least one substituent more preferably being a sulfo group, and two substituents being still more preferable. In the case of a lower alkoxy group having a sulfo group, a straight chain alkoxy is preferable, and the substitution site of the sulfo group is preferably at the alkoxy group terminal. In this context, "lower alkoxy group" refers to an alkoxyl group comprising 1-5 carbon atoms; in the case of a lower alkoxy group having a sulfo group, either a 3-sulfopropoxy group or a 4-sulfobutoxy group is preferable. In the case that A in formula (I) is a phenyl group having a substituent, examples of the feedstock compound represented by formula (IV) include 4-aminobenzene sulfonic acid, 3-aminobenzene sulfonic acid, 2-aminobenzene sulfonic acid, 4-aminobenzoic acid, 2-amino-5-methylbenzene sulfonic acid, 2-amino-5-methoxybenzene sulfonic acid, 4-amino-2-methylbenzene sulfonic acid, 3-amino-4-methoxybenzene sulfonic acid, 2-amino-4-sulfobenzoic acid, 2-amino-5-sulfobenzoic acid, and the like; and 5-aminoisophthalic acid, 2-amino-5-nitrobenzene sulfonic acid, 5-acetamide-2-aminobenzene sulfonic acid, 2-amino-5-(3-sulfopropoxy)benzene sulfonic acid, 4-aminobenzene-1,3-disulfonic acid, 2-aminobenzene-1,4-disulfonic acid, and the like. 4-aminobenzene sulfonic acid, 2-amino-5-methoxybenzene sulfonic acid, 4-amino-2-methylbenzene sulfonic acid, and 4-aminobenzene-1,3-disulfonic acid are especially preferable. A naphthotriazole group may be present as the substituent of the phenyl group, examples of which include a 6,8-disulfonaphthotriazole group, a 7,9-disulfonaphthotriazole group, a 7-sulfonaphthotriazole group, or a 5-sulfonaphthotriazole group; in such cases, the groups is preferably located at the p-site of the phenylazo group. Specific examples of the substituent of the napthylamine sulfonic acid include a hydrogen atom, a sulfo group, a hydroxy group, a tosylate hydroxy group, an amino group, a substituted amino group, a nitro group, a substituted amide group, or a lower alkoxy group having a sulfo group; with a hydrogen atom, sulfo group, or lower alkoxy group having a sulfo group being preferable. In the case of a lower alkoxy group having a sulfo group, a straight chain alkoxy is preferable, and the substitution site of the sulfo group is preferably at the alkoxy group terminal. In this context, "lower alkoxy group" refers to an alkoxyl group comprising 1-4 carbon atoms; in the case of a lower alkoxy group having a sulfo group, either a 3-sulfopropoxy group or a 4-sulfobutoxy group is preferable. The number n of substituted sulfo groups is preferably 1-3, and the sulfo group(s) may be present in either benzene core of the naphthalene annulus, with the substitution site of the sulfo group preferably being one of a 1-, 3-, or 6- site,

or a combination of any of a 1- site, a 3-site, a 6- site, or a 7- site if multiple sulfo groups are present. The group of compounds represented by A1 is, for example, 2-aminonaphthalene-1-sulfonic acid, 8-aminonaphthalene-1-sulfonic acid, 5-aminonaphthalene-1-sulfonic acid, 5-aminonaphthalene-2-sulfonic acid, 8-aminonaphthalene-2-sulfonic acid, 3-aminonaphthalene-1-sulfonic acid, 6-aminonaphthalene-2-sulfonic acid, 4-aminonaphthalene-1-sulfonic acid, 7-aminonaphthalene-1,3-disulfonic acid, 6-aminonaphthalene-1,3-disulfonic acid, 3-amino-7-nitronaphthalene-1,5-disulfonic acid, 4-aminonaphthalene-1,6-disulfonic acid, 4-aminonaphthalene-1,5-disulfonic acid, 5-aminonaphthalene-1,3-disulfonic acid, 3-aminonaphthalene-1,5-disulfonic acid, 2-aminonaphthalene-1,5-disulfonic acid, 4-aminonaphthalene-1,6-disulfonic acid, 7-aminonaphthalene-1,3,6-trisulfonic acid, 7-aminonaphthalene-1,3,5-trisulfonic acid, 8-aminonaphthalene-1,3,6-trisulfonic acid, 5-aminonaphthalene-1,3,6-trisulfonic acid, 7-amino-3-(3-sulfopropoxy)naphthalene-1-sulfonic acid, 7- amino-3-(4-sulfabutaxy}naphthalene-1-sulfanic acid, 7-amino-4-(3-sulfopropoxy)naphthalene-2-sulfonic acid, 7-amino-4-(4-sulfobutoxy)naphthalene-2-sulfonic acid, 6-amine-4-(3-sulfopropoxy)naphthalene-2-sulfonic acid, 6-amino-4-(4-sulfobutoxy)naphthalene-2-sulfonic acid, 2-amine-5-(3-sulfopropoxy)naphthalene-1,7-disulfonic acid, 6-amino-4-(3-sulfopropoxy)naphthalene-2,7-disulfonic acid, or 7-amino-3-(3-sulfopropoxy)naphthalene-1,5-disulfonic acid; preferably 7-aminonaphthalene-1,3-disulfonic acid, 6-aminonaphthalene-1,3-disulfonic acid, 7-aminonaphthalene-1,3,6-trisulfonic acid, 7-amino-4-(3-sulfopropoxy)napthalene-2-sulfonic acid, or 6-amino-4-(3-sulfopropoxy)napthalene-2-sulfonic acid; especially preferably 7-aminonaphthalene-1,3-disulfonic acid, 7-aminonaphthalene-1,3,6-trisulfonic acid, or 7-amino-4-(3-sulfopropoxy)napthalene-2-sulfonic acid.

The substituents of the aniline comprising substituents ($R_1$-$R_6$) used for primary, secondary, and tertiary coupling is a hydrogen atom, lower alkyl group, lower alkoxyl group, or a lower alkoxy group having a sulfo group; preferably a hydrogen atom, methyl group, methoxy group, a 3-sulfopropoxy group, a 4-sulfobutoxy group, or a carboxyl group; more preferably a hydrogen atom, methyl group, methoxy group, or 3-sulfopropoxy group. These substituents may have single or double bonds. The bonding site is a 2- site; a 3- site, a 2- site, and a 5-site; a 3- site and a 5- site; or a 2- site and a 6- site of the amino group; preferably a 3- site, a 2- site, and a 5-site. Examples of anilines comprising a lower alkoxyl group comprising a sulfone group include 3-(2-amino-4-methylphenoxy)propane-1-sulfonic acid, 3-(2-aminophenoxy)propane-1-sulfonic acid, and 3-(2-amino-4-methylphenoxy)butane-1-sulfonic acid. Examples of other anilines include aniline, 2-methylaniline, 3-methylaniline, 2-ethylaniline, 3-ethylaniline, 2,5-dimethylaniline, 2,5-diethylaniline, 2-methoxyaniline, 3-methoxyaniline, 2-methoxy-5-methylaniline, 2,5-dimethoxyaniline, 3,5-dimethylaniline, 2,6-dimethylaniline, and 3,5-dimethoxyaniline. These anilines may have a protected amino group. An example of a protecting group is ω-methanesulfone group. The aniline used for primary coupling and the aniline used for secondary coupling may be identical or different.

X, which is the tertiary coupling component when m = 0 or the quaternary coupling component when m = 1, is a benzoylamino group optionally having a substituent, a phenylamino group optionally having a substituent, a phenylazo group optionally having a substituent, or a naphthotriazole group optionally having a substituent, the substituent preferably being a hydrogen atom, a lower alkyl group, a lower alkoxyl group, a hydroxyl group, a carboxyl group, a sulfone, or an amino group optionally having a substituent.

If X is a phenylamino group optionally having a substituent, it is preferably a phenylamino group having the substituents ($R_9$, $R_{10}$) shown in formula (H). The substituents ($R_9$, $R_{10}$) independently represent a hydrogen atom, a methyl group, a methoxy group, a sulfo group, an amino group, or a substituted amino group, preferably a hydrogen atom, a methyl group, a methoxy group, or an amino group, at least one substituent more preferably being at a p-site of the amino group. Examples include a phenylamino group, a 4-methylphenylamino group, 4-methoxyphenylamino group, 4-aminophenylamino group, 4-amino-2-sulfophenylamino group, 4-amino-3-sulfophenylamino group, a 4-sulfomethylaminophenylamino group, or a 4-carboxyethylaminophenylamino group.

[Formula 106]

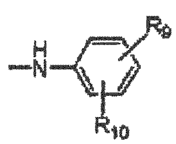

FORMULA (H)

If X is a benzoylamino group optionally having a substituent, a benzoylamino group having substituent ($R_{11}$) shown in formula (J) is preferable. Substituent ($R_{11}$) represents a hydrogen atom, an amino group, or an amino group optionally having a substituent, the substitution site preferably being a p-site. Examples of benzoylamino groups optionally having a substituent include a benzoylamino group, a 4-aminobenzoylamino group, a 4-hydroxybenzoylamino group, or a 4-carboxyethylaminobenzoylamino group.

[Formula 107]

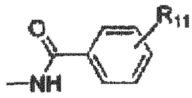

FORMULA (J)

If X is a naphthotriazole group optionally having a substituent, a naphthotriazole group having a sulfone group shown in formula (K) is preferable. j represents 1 or 2, preferably 2, and examples include a 6,8-disulfonaphthotriazole group, a 7,9-disulfonaphthotriazole group, a 7-sulfonaphthotriazole group, or a 5-sulfonaphthotriazole group. If X is naphthotriazole group optionally having a substituent, an amino-3-sulfonic acid-1-naphthol and a complex copper salt compound may be formed if one or two methoxy groups are comprised as substituents in the aniline having substituents ($R_3$ and $R_4$) constituting the secondary coupling component when m = 0. The complex copper salt compound may be formed by treating copper sulfate or the like according to a known method to form a complex copper salt compound. Examples of secondary coupling components capable of being used to prepare the complex copper salt compound in the case of a naphthotriazole group optionally having a substituent when m = 0 include 2-methoxyaniline, 2-methoxy-5-methylaniline, 2,5-dimethoxyaniline, 3,5-dimethylaniline, 2,6-dimethylaniline, and 3,5-dimethoxyaniline. These anilines may have a protected amino group. An example of a protecting group is ω-methanesulfone group. The aniline used for primary coupling and the aniline used for secondary coupling may be identical or different.

[Formula 108]

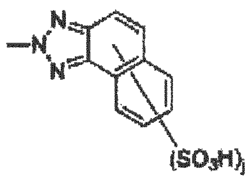

FORMULA (K)

The compound represented by formula (I) of the present invention may be present in the form of a free acid or a salt thereof. Examples of salts include alkali metal salts, alkali earth metal salts, alkylamine salts, alkanolamine salts, and ammonium salts. If dyeing of a substrate for a polarizing film is performed, a sodium, potassium, or ammonium salt is preferable. A salt of the compound represented by formula (I) can be isolated in the form of a free acid by adding a mineral acid after the coupling reaction, after which inorganic salts can be removed by cleaning with water or acidified water. Next, a solution of a salt corresponding to the low-salt-content acidic pigment so obtained can be prepared by neutralizing using a desired organic or inorganic base in an aqueous medium. Alternatively, sodium chloride can be used when performing salt precipitation following the coupling reaction to obtain a sodium salt, or potassium chloride can be used to obtain a potassium salt, allowing a desired salt to be obtained. Treatment using copper sulfate or the like to obtain a complex copper salt compound is also possible.

The azo compound represented by formula (I), a salt thereof, or a transition metal complex thereof may be used singly or in combination in the dye-based polarizing element or dye-based polarizing plate of the present invention, or one or more type of other organic dye may also be used as necessary. There is no particular restriction upon the additional organic dye, but it preferably dyes hydrophilic polymers and is a highly dichromatic dye having absorption properties in a wavelength region different from the absorption wavelength region of the azo compound or salt thereof according to the present invention. Representative non-limiting examples include C.I. Direct Yellow 12, C.I. Direct Yellow 28, C.I. Direct Yellow 44, C.I. Direct Orange 26, C.I. Direct Orange 39, C.I. Direct Orange 71, C.I. Direct Orange 107, C.I. Direct Red 2, C.I. Direct Red 31, C.I. Direct Red 79, C.I. Direct Red 81, C.I. Direct Red 247, C.I. Direct Green 80, and C.I. Direct Green 59, which may be selected according to purpose. These pigments may be used as free acids, or as alkali metal salts (such as sodium salts, potassium salts, or lithium salts), ammonium salts, or amine salts.

If another organic dye is additionally used as necessary, the dye type will differ according to whether the desired polarizing element is a neutral-colored polarizing element, a colored polarizing element for a liquid crystal projector, or another type of colored polarizing element.

There is no particular limitation upon the proportion thereof in the formulation; generally, a total amount of one or more organic dye in a range of 0.1-10 parts by weight with respect to the weight of the azo compound represented by formula (I) or salt thereof is preferable.

After the dyeing step, a cleaning step (hereafter, "cleaning step 1") can be performed before proceeding to the

next step. The cleaning step 1 is a step of cleaning off dye solvent adhering to the surface of the polyvinyl alcohol resin film from the dyeing step. Performing a cleaning step 1 allows migration of the dye into the solution being treated in the next step to be suppressed. Water is generally used in the cleaning step 1. The cleaning method preferably involves immersion in the solution, but it is also possible to apply the solution to the polyvinyl alcohol resin film. There is no particular limitation upon the cleaning time, but 1-300 seconds is preferable, and 1-60 seconds more preferable. The temperature of the solvent used in cleaning step 1 must be a temperature that will not dissolve a hydrophilic polymer. The cleaning treatment is generally performed at 5-40°C.

After the dyeing step or cleaning step 1, a step of adding a crosslinking agent and/or a water resistance agent can be performed. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride, with boric acid being preferable. A step of adding a crosslinking agent and/or a water resistance agent is performed using one or more of the abovementioned crosslinking agents and/or water resistance agents. Water is preferably used as the solvent, but the present invention is not limited to such. The concentration of the crosslinking agent and/or water resistance agent in the solvent in the step of adding a crosslinking agent and/or a water resistance agent is preferably 0.1-6.0% by weight of the solvent in the case of boric acid, for example, and more preferably 1.0-4.0% by weight. The temperature of the solvent used in this step is preferably 5-70°C, more preferably 5-50°C. The method used to incorporate the crosslinking agent and/or water resistance agent into the polyvinyl alcohol resin film is preferably immersion in the solution, but it is also acceptable to apply or paint the solution onto the polyvinyl alcohol resin film. The treatment time for this process is preferably from 30 seconds to 6 minutes, more preferably 1-5 minutes. However, it is not essential to add a crosslinking agent and/or a water resistance agent, and this step may be omitted if time must be reduced or a cross-linking or water resistance treatment is unnecessary.

After performing the dyeing step, cleaning step 1, and step of adding a crosslinking agent and/or a water resistance agent, a stretching step is performed. The stretching step is a step of uniaxially stretching the polyvinyl alcohol film. The stretching method may be a wet stretching method or a dry stretching method, and the present invention can be attained by stretching to a stretch factor of at least 3. The stretch factor is preferably at least 3, more preferably 5-7.

If a dry stretching method is used and the stretching/heating medium is air, stretching is preferably performed at a temperature in a range from room temperature to 180°C. Treatment is preferably performed in an atmosphere having a relative humidity of 20-95% RH. Non-limiting examples of heating methods include inter-roller zone stretching, roller-heated stretching, rolling, and infrared-heated stretching. The stretching step can be performed in one stage, or in two or more multiple stages.

If a wet sstretching method is used, stretching is performed in water, a water soluble organic solvent, or a mixed solvent thereof. Stretching is preferably performed while immersing the film in a solution containing a crosslinking agent and/or water resistance agent. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride. Stretching is performed in a solution containing one or more of the abovementioned crosslinking agents and/or water resistance agents. The crosslinking agent is preferably boric acid. The crosslinking agent and/or water resistance agent concentration in the stretching step is preferably, for example, 0.5-15% by weight, more preferably 2.0-8.0% by weight. A stretch factor of 2-8 is preferable, and 5-7 more preferable. The stretching temperature is preferably 40-60°C, and more preferably 45-58°C. The stretching time is ordinarily from 30 seconds to 20 minutes, more preferable 2-5 minutes. The wet stretching step can be performed in one stage, or in two or more multiple stages.

After the stretching step has been performed, precipitation of crosslinking agent and/or water resistance agent or foreign matter adhering to the surface of the film may occur; thus, a cleaning step of cleaning the surface of the film (hereafter, "cleaning step 2") can be performed. The cleaning time is preferably from 1 second to 5 minutes. The cleaning method preferably involves immersion in a cleaning solution, but it is also possible to apply or paint the solution onto the polyvinyl alcohol resin film. The cleaning treatment can be performed in one stage, or in two or more multiple stages. There is no particular limitation upon the temperature of the solution used in the cleaning step; ordinarily, the temperature will be 5-50°C, preferably 10-40°C.

Non-limiting examples of the solvent used in the preceding steps include water; dimethyl sulfoxide; N-methylpyrrolidone; alcohols such as methanol, ethanol, propanol, isopropyl alcohol, glycerol, ethylene glycol, propylene glycol, diethylene glycol, triethylene glycol, tetraethylene glycol, or trimethylol propane; and amines such as ethylenediamine or diethylenetriamine. A mixture of one or more of these solvents can also be used. Water is the most preferable solvent.

After the stretching step or cleaning step 2, a film drying step is performed. Drying can be performed via natural drying, or moisture on the film surface can be removed via roller compression, an air knife, or a water absorbent roller to improve drying efficiency, and/or blow-drying can be performed. The drying temperature is preferably 20-100°C, more preferably 60-100°C. The drying time can be from 30 seconds to 20 minutes, with 5-10 minutes being preferable.

The polyvinyl alcohol resin film polarizing element with improved optical properties and durability according to the present invention can be obtained according to the method described above.

A transparent protective layer is provided on one or both sides of the obtained polarizing element to yield a polarizing plate. The transparent protective layer can be provided in the form of a polymer coating layer or a laminated film layer. The transparent polymer or film forming the transparent protective layer is preferably a transparent polymer or film having high mechanical strength and good thermal stability. Examples of substances used to form the transparent protective layer include cellulose acetate resins such as triacetyl cellulose or diacetyl cellulose, or films thereof; acrylic resins or films thereof; polyvinyl chloride resins or films thereof; nylon resins or films thereof; polyester resins or films thereof; polyarylate resins or films thereof; cyclic polyolefin resins comprising a cyclic olefin such as norbornene as a monomer, or films thereof; polyolefins having a polyethylene, polypropylene, cyclo-, or norbornene frame, or copolymers thereof; and resins having an imide and/or an amide as a main chain or side chain, or polymers or films thereof. A liquid crystalline resin or film thereof can also be provided as the transparent protective layer. The thickness of the protective film is, for example, from 0.5-200 $\mu$m. Identical or different types of resin or film are provided in one or more layers on one or both surfaces to create a polarizing plate.

An adhesive is necessary in order to bond the transparent protective layer to the polarizing element. There is no particular limitation upon the adhesive, but a polyvinyl alcohol-based adhesive is preferable. Non-limiting examples of polyvinyl alcohol-based adhesives include Gohsenol™ NH-26 (Nippon Gohsei) and Exceval™ RS-2117 (Kuraray). A crosslinking agent and/or water resistance agent can be added to the adhesive. A maleic anhydride-isobutylene copolymer is used for the polyvinyl alcohol-based adhesive, but an adhesive into which a crosslinking agent is mixed as necessary can be used. Examples of maleic anhydride-isobutylene copolymers include Isobam #18 (Kuraray), Isobam #04 (Kuraray), ammonia-modified Isobam #104 (Kuraray), ammonia-modified Isobam #110 (Kuraray), imidated Isobam #304 (Kuraray), and imidated Isobam #310 (Kuraray). A water soluble polyhydric epoxy compound can be used as a crosslinking agent at this time. Examples of water soluble polyhydric epoxy compounds include Denacol EX-521 (Nagase ChemteX) and Tetrad-C (Mitsui Gas Chemical (*3)). Known adhesives other than a polyvinyl alcohol resin adhesives, such as urethane, acrylic, or epoxy adhesives, can also be used. In order to improve the adhesive strength of the adhesive or to improve water resistance, an additive such as a zinc compound, a chloride, or an iodide can simultaneously be added to a concentration of 0.1-10% by weight. There is no particular limitation upon the additive. After the transparent protective layer is bonded using the adhesive, drying or heat treatment is performed at a suitable temperature to obtain a polarizing plate.

In some cases, such as, for instance, when the obtained polarizing plate is bonded to a liquid crystal or organic electroluminescent display device, various functional layers or brightness-improving layers or films can be provided on the surface of the unexposed side of the protective layer or film in order to improve viewing angle and/or contrast. A glue is preferably used to bond the polarizing plate to these films or display devices.

Various known functional layers, such as a reflection- or glare-preventing layer or a hard coating layer, may be present on the other side of the polarizing plate, i.e., on the exposed side of the protective layer or film. A coating method is preferred for forming these various functional layers, but films having the functions can be bonded to the film using an adhesive or glue. The various functional layers can be a layer or film for controlling phase contrast.

By optimizing the physical properties of the polyvinyl alcohol resin film having a degree of polymerization of 5,000 to 10,000 according to the present invention and designing an optimal pigment structure according to the method described above, a polarizing element and polarizing plate having improved optical properties and light, heat, and humidity resistance can be obtained. An LCD device using the polarizing element or polarizing plate according to the present invention is highly reliable and exhibits high contrast over extended periods, as well as high color reproducibility.

The polarizing element or polarizing plate according to the present invention so obtained can be used with a liquid crystal projector, calculator, clock, laptop computer, word processor, liquid crystal television, polarizing lens, polarized glasses, car navigation system, or interior or exterior instrument or display device, providing a protective layer, functional layer, or backing as necessary.

One possible application for the polarizing plate according to the present invention is to use the plate as a polarizing plate with backing. The backing preferably has a flat surface to which the polarizing plate can be bonded, or a molded glass piece for optical applications. Examples of molded glass pieces include a glass plate, a lens, a prism (such as a triangular prism or cubic prism), and the like. A polarizing plate bonded to a lens can be used as a condenser lens with polarizing plate in a liquid crystal projector. A polarizing plate bonded to a prism can be used as a polarizing beam splitter with polarizing plate or dichroic prism with polarizing plate for a liquid crystal projector. The plate may also be bonded to a liquid crystal cell. Examples of glass materials include soda glass, borosilicate glass, an inorganic crystal base, an inorganic sapphire base, or another inorganic glass, or organic plastic sheets of acrylic, polycarbonate, or the

like, with inorganic glass being preferable. The thickness and size of the glass plate can be as desired. An AR layer is preferably provided on one or both of a glass side and a polarizing plate side of a polarizing plate with glass in order to further improve single plate light transmission. A transparent adhesive (or glue) is applied to the backing on, for example, a flat backing surface section, to which the polarizing plate according to the present invention is bonded. It is also possible to apply a transparent adhesive (or glue) to the polarizing plate, then bond the backing thereto. The adhesive (or glue) used here is preferably, for example, an acrylic ester adhesive. If the polarizing plate is used as an elliptical polarizing plate, the phase contrast plate side is ordinarily bonded to the backing, but the polarizing plate side may also be bonded to a molded glass piece.

Examples

The present invention will be explained in greater detail below with the aid of examples and comparative examples, but the present invention is not limited to these examples.
The transmission of the examples was rated as follows.
Respective transmission was measured using a spectrophotometer (Hitachi U-4100).
To measure transmission using a spectrophotometer (Hitachi U-4100), an iodine-based polarizing plate (Polatechno SKN-18043P) having a visibility-corrected transmission of 43% and a polarization level of 99.99% as measured according to JIS-Z 8701 (C light source, 2° field of view) was set on the light-emitting side, and absolutely polarized light was directed upon a measurement specimen. The protective layer of the iodine-based polarizing plate was of non-UV-absorbing triacetyl cellulose.
The absolute parallel transmission rates for various wavelengths obtained by directing absolutely polarized light upon the polarizing plate according to the present invention and measuring so that the oscillation direction of the absolutely polarized light and the absorption axis direction of the polarizing plate according to the present invention are orthogonal (i.e., the absorption axis of the absolute polarized photons and the absorption axis of the polarizing plate according to the present invention are parallel) were labeled Ky, and absolute orthogonal transmission rates for various wavelengths obtained by measuring so that the oscillation direction of the absolutely polarized light and the absorption axis direction of the polarizing plate according to the present invention are parallel (i.e., the absorption axis of the absolute polarized photons and the absorption axis of the polarizing plate according to the present invention are orthogonal) were labeled Kz.
The Ky and Kz for various wavelengths were used to calculate the single plate transmission Ts for the different wavelengths according to formula (L), and the polarization level p for the different wavelengths according to formula (M).

$$\text{Single plate transmission } Ts = (Ky + Kz) / 2 \quad \text{Formula (L)}$$

$$\text{Polarization level } \rho = (Ky - Kz) / (Ky + Kz) \quad \text{Formula (M)}$$

The azo compounds used in the following examples were synthesized according to the following methods.

[Synthesis Example 1] Synthesizing Example Compound 12

20.3 parts of 2-amino-5-methoxybenzene sulfonic acid was added to 500 parts of water, dissolved using sodium hydroxide, and cooled to 10°C or less, 32 parts of 35° hydrochloric acid was added, after which 6.9 parts of sodium nitrite was added, and the whole mixture was stirred for one hour at 5-10°C. To this was added 13.7 parts of 2,5-dimethylaniline dissolved in a dilute aqueous solution of hydrochloric acid, after which sodium carbonate was added to bring the pH to 3 while the mixture was stirred at 30-40°C, further stirring was performed to complete the coupling reaction, and the mixture was filtered to obtain a monoazo compound. 32 parts of 35% hydrochloric acid was added to the obtained monoazo compound, after which 6.9 parts of sodium nitrite was added, and the mixture was stirred for two hours at 25-30°C. To this was added 12.1 parts of 2,5-dimethylaniline dissolved in a dilute aqueous solution of hydrochloric acid, after which sodium carbonate was added to bring the pH to 3 while the mixture was stirred at 20-30°C, further stirring was performed to complete the coupling reaction, and the mixture was filtered to obtain a disazo compound. 15 parts of the obtained disazo compound was dispersed in 600 parts of water, after which 32 parts of 35% hydrochloric acid was added followed by 6.9 parts of sodium nitrite, and the mixture was stirred for two hours at 25-30°C and diazofied.

Meanwhile, 35.8 parts of 6-(4'-aminobenzoyl)amino-3-sulfonic acid-1-naphthol (commonly referred to as aminobenzoyl J acid) was added to 250 parts of water and dissolved using sodium carbonate to weak alkalinity, the diazofied disazo compound previously obtained was injected into this liquid while maintaining a pH of 7-10, and the liquid was stirred to complete the coupling reaction. Salting out using sodium chloride and filtering were then performed to obtain the trisazo compound represented by Example Compound 12 of the present invention as a sodium salt.

[Synthesis Example 2] Synthesizing Example Compound 14

The trisazo compound of Example Compound 14 was obtained as a sodium salt in a similar manner, except that 6-(4'-aminobenzoyl)amino-3-sulfonic acid-1-naphthol (commonly referred to as aminobenzoyl J acid) of synthesis example 1 was changed to 6-(4'-benzoyl phenyl)amino-3-sulfonic acid-1-naphthol (commonly referred to as benzoyl J acid).

[Synthesis Example 3] Synthesizing Example Compound 17 The trisazo compound of Example Compound 17 was obtained as a sodium salt in a similar manner, except that 6-(4'-aminobenzoyl)amino-3-sulfonic acid-1-naphthol (commonly referred to as aminobenzoyl J acid) of synthesis example 1 was changed to 6-(4'-methoxyphenyl)amino-3-sulfonic acid-1-naphthol.

[Synthesis Example 4] Synthesizing Example Compound 18 The trisazo compound represented by Example Compound 18 was obtained as a sodium salt in a similar manner, except that the primary coupler was changed from 2,5-dimethylaniline to 3-(2-amino-4-methylphenoxy)propane-1-sulfonic acid in Example Compound 17 of synthesis example 3.

[Synthesis Example 5] Synthesizing Example Compound 20 The trisazo compound of Example Compound 20 was obtained as a sodium salt in a similar manner, except that 6-(4'-aminobenzoyl)amino-3-sulfonic acid-1-naphthol (commonly referred to as aminobenzoyl J acid) of synthesis example 1 was changed to 6-(4-amino-3-sulfophenyl)amino-3-sulfonic acid-1-naphthol.

[Synthesis Example 6] Synthesizing Example Compound 22 The trisazo compound represented by Example Compound 22 was obtained as a sodium salt in a similar manner, except that 2-amino-5-methoxybenzene sulfonic acid constituting the feedstock compound of synthesis example 5 was changed to 36.1 parts of 7-amino-3-(3-sulfopropoxy)naphthalene-1-sulfonic acid.

[Synthesis Example 7] Synthesizing Example Compound 36 38.3 parts of 7-aminonaphthalene-1,3,6-trisulfonic acid was added to 500 parts of water and cooled to 10°C or less, 31.3 parts of 35% hydrochloric acid was added, after which 6.9 parts of sodium nitrite was added, and the whole mixture was stirred for one hour at 5-10°C to diazofy the mixture. To this was added 10.7 parts of 3-methylaniline dissolved in a dilute aqueous solution of hydrochloric acid, after which sodium carbonate was added to bring the pH to 3 while the mixture was stirred at 10-30°C, further stirring was performed to complete the coupling reaction, and the mixture was filtered to obtain a 40.1 parts of a monoazo-amino compound. The obtained monoazo-amino compound was added to 400 parts of water and dissolved using sodium hydroxide, 25.0 parts of 35% hydrochloric acid followed by 5.5 parts of sodium nitrite were added at 10-30°C, and the mixture was stirred and diazofied for one hour at 20-30°C. To this was added 8.6 parts of 3-methylaniline dissolved in a dilute aqueous solution of hydrochloric acid, after which sodium carbonate was added to bring the pH to 3 while the mixture was stirred at 20-30°C, further stirring was performed to complete the coupling reaction, and the mixture was filtered to obtain 39.7 parts of a disazo-amino compound. The obtained disazo-amino compound was added to 250 parts of water and dissolved using sodium hydroxide, 20.0 parts of 35% hydrochloric acid followed by 4.4 parts of sodium nitrite were added at 20-30°C, and the mixture was stirred and diazofied for one hour at 20-30°C. To this was added 7.7 parts of 2,5-dimethylaniline dissolved in a dilute aqueous solution of hydrochloric acid, after which sodium arbonate was added to bring the pH to 3.5 while the mixture was stirred at 20-30°C, further stirring was performed to complete the coupling reaction, and the mixture was filtered to obtain 38.5 parts of a trisazo-amino compound. The obtained trisazo-amino compound was added to 200 parts of water and dissolved using sodium hydroxide, 16.0 parts of 35% hydrochloric acid followed by 3.5 parts of sodium nitrite were added at 20-30°C, and the mixture was stirred and diazofied for one hour at 20-30°C. Meanwhile, 16.1 parts of 6-aminophenyl-3-sulfonic acid-1-naphthol (commonly referred to as phenyl J acid) was added to 50 parts of water and dissolved using sodium carbonate to weak alkalinity, the diazofied trisazo compound previously obtained was injected into this liquid while maintaining a pH of 8-10, and the liquid was stirred to complete the coupling reaction. Salting out using sodium chloride and filtering were then performed to obtain the tetrakisazo compound represented by Example Compound 36 as a sodium salt.

[Synthesis Example 8] Synthesizing Example Compound 43 The tetrakisazo compound represented by Example Compound 43 was abtained in a similar manner, except that 6-aminophenyl-3-sulfonic acid-1-naphthol (commonly referred to as phenyl J acid) used to synthesize Example Compound 36 in synthesis example 7 was changed to 6-(6,8-disulfonaphthotriazole)-3-sulfonic acid-1-naphthol.

[Synthesis Example 9] Synthesizing Example Compound 67 The tetrakisazo compound represented by Example Compound 67 was obtained in a similar manner, except that 7-aminonaphthalene-1,3,6-trisulfonic acid used to

synthesize Example Compound 36 in synthesis example 7 was changed to 4-aminobenzene-1,3-disulfonic acid, and 6-aminophenyl-3-sulfonic acid-1-naphthol (commonly referred to as phenyl J acid) was changed to 6-(4-methoxyphenyl)amino-3-sulfonic acid-1-naphthol.

[Synthesis Example 10] Synthesizing Example Compound 71 The tetrakisazo compound represented by Example Compound 71 was obtained in a similar manner, except that 7-aminonaphthalene-1,3,6-trisulfonic acid used to synthesize Example Compound 36 in synthesis example 7 was changed to 4-aminobenzene-1,3-disulfonic acid, and 6-aminophenyl-3-sulfonic acid-1-naphthol (commonly referred to as phenyl J acid) was changed to 6-(6,8-disulfonaphthotriazole)-3-sulfonic acid-1-naphthol.

[Synthesis Example 11] Synthesizing Example Compound 72 The tetrakisazo compound represented by Example Compound 72 was obtained in a similar manner, except that 7-aminonaphthalene-1,3,6-trisulfonic acid used to synthesize Example Compound 36 in synthesis example 7 was changed to 4-aminobenzene-1,3-disulfonic acid, and 6-aminophenyl-3-sulfonic acid-1-naphthol (commonly referred to as phenyl J acid) was changed to 6-(4'-aminobenzoyl)amino-3-sulfonic acid-1-naphthol (commonly referred to as aminobenzoyl J acid).

[Example 1] A polyvinyl alcohol resin film (Kuraray VF series) having a degree of saponification of 99% or greater, a film thickness of 40 μm, a degree of polymerization of 5,500, and a swelling level of 232% was immersed for three minutes in 30°C warm water to perform a swelling treatment. The swelled film was immersed in a 35°C aqueous solution containing 0.3% by weight of the pigment of Example Compound 12, 0.1% by weight of sodium tripolyphosphate, and 0.1% by weight of mirabilite to adsorb the pigment. The film with adsorbed pigment was cleaned in water, after which a 20°C aqueous solution of 2% by weight of boric acid was used to perform boric acid treatment for one minute. The film obtained from the boric acid treatment was treated for five minutes in a 58°C aqueous solution containing 3.0% by weight of boric acid while being stretched to a factor of 5.0. The film obtained from the boric acid treatment was treated for five seconds using room temperature water while keeping the film in a state of tension. The treated film was immediately dried for five minutes at 60°C to obtain a polarizing element having a single plate transmission of 44% and a thickness of 15 μm. A polarizing element using a polyvinyl alcohol film having a degree of polymerization of 5,500 was manufactured according to the method described above.

The polarizing element was layered with an alkali-treated triacetyl cellulose film (Fuji Photographic Film TD-80U; hereafter, "TAC") having a thickness of 80 pm using a polyvinyl alcohol-based adhesive in a TAC/adhesive layer/polarizing element/adhesive layer/TAC configuration to obtain a laminated polarizing plate for use as a measurement specimen.

A polarizing element was similarly manufactured using a polyvinyl alcohol resin film (Kuraray VF-PS) having a thickness of 75 μm and a degree of polymerization of 2,400, and a polarizing element was manufactured using a polyvinyl alcohol film having a degree of polymerization of 2,400 was manufactured in order to compare differences in optical properties arising from the degree of polymerization. A polarizing plate using the polarizing element was also manufactured via lamination using TAC film and used as a comparison measurement specimen.

[Example 2] A sample was prepared in a manner similar to Example 1, except that Example Compound 14 was used instead of Example Compound 12 used in Example 1, to create a measurement specimen.

[Example 3] A sample was prepared in a manner similar to Example 1, except that example compound 17 was used instead of Example Compound 12 used in Example 1, to create a measurement specimen.

[Example 4] A sample was prepared in a manner similar to Example 1, except that Example Compound 18 was used instead of Example Compound 12 used in Example 1, to create a measurement specimen.

[Example 5] A sample was prepared in a manner similar to Example 1, except that Example Compound 20 was used instead of Example Compound 12 used in Example 1, to create a measurement specimen.

[Example 6] A sample was prepared in a manner similar to Example 1, except that Example Compound 22 was used instead of Example Compound 12 used in Example 1, to create a measurement specimen.

[Example 7] A sample was prepared in a manner similar to Example 1, except that Example Compound 36 was used instead of Example Compound 12 used in Example 1, to create a measurement specimen.

[Example 8] A sample was prepared in a manner similar to Example 1, except that Example Compound 43 was used instead of Example Compound 12 used in Example 1, to create a measurement specimen.

[Example 9] A sample was prepared in a manner similar to Example 1, except that Example Compound 67 was used instead of Example Compound 12 used in Example 1, to create a measurement specimen.

[Example 10] A sample was prepared in a manner similar to Example 1, except that Example Compound 71 was used instead of Example Compound 12 used in Example 1, to create a measurement specimen.

[Example 11] A sample was prepared in a manner similar to Example 1, except that Example Compound 72 was used instead of Example Compound 12 used in Example 1, to create a measurement specimen.

[Example 12] A sample was created in a similar manner, except that the swelling level of the 5,500 polymerized PVA used in Example 1 was 208%, to create a measurement specimen.

[Example 13] A sample was created in a similar manner, except that the swelling level of the polymerized PVA used in Example 1 was changed from 232% to 208%, to create a measurement specimen.

[Comparative Example 1] A sample was prepared in a similar manner, except that the pigment represented in formula (B1) was used for the Example Compound 12 used in Example 1, to create a measurement specimen.

[Formula 109]

FORMULA (B1)

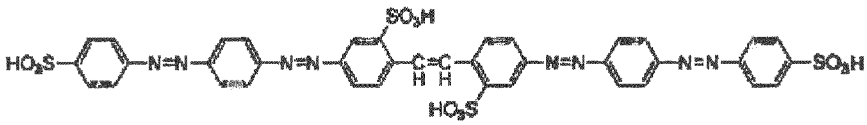

[Comparative Example 2] A sample was prepared in a similar manner, except that the pigment represented in formula (B2) was used for the Example Compound 12 used in Example 1, to create a measurement specimen.

[Formula 110]

FORMULA (B2)

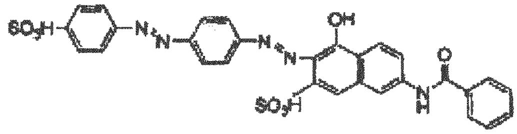

[Comparative Example 3] A sample was prepared in a similar manner, except that the pigment represented in formula (B3) was used for the Example Compound 12 used in Example 1, to create a measurement specimen.

[Formula 111]

FORMULA (B3)

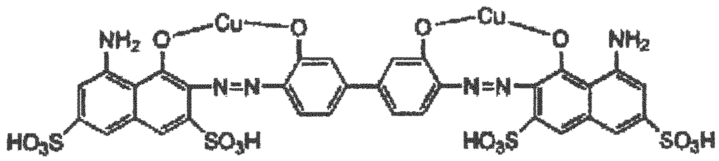

[Comparative Example 4] A sample was prepared in a similar manner, except that the pigment represented in formula (B4) was used for the Example Compound 12 used in Example 1, to create a measurement specimen.

[Formula 112]

FORMULA (B4)

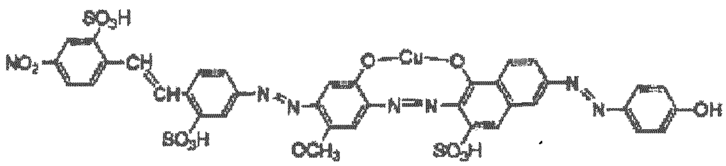

Table 1 shows polarization properties for the samples obtained in Examples 1 to 13 and Comparative Examples 1 to 4. Polarization properties refers to the polarization level p at a Ts of 44% for a wavelength (hereafter, "$\lambda_{max}$") representing the maximum polarization properties for each polarizing plate sample. Polarization levels are shown for each of the examples and comparative examples at PVA degree of polymerizations of 5,500 and 2,400.

[Table 1]

| | $\lambda_{max}$ | Polarization (%) at polymerization of 5,500 | Polarization (%) at polymerization of 2,400 | Improvement in polarization properties (%) |
|---|---|---|---|---|
| Example 1 | 555 | 99.42 | 98.81 | 0.61 |
| Example 2 | 575 | 99.48 | 98.86 | 0.62 |
| Example 3 | 580 | 99.30 | 98.72 | 0.58 |
| Example 4 | 590 | 99.18 | 98.56 | 0.62 |
| Example 5 | 585 | 98.85 | 98.24 | 0.61 |
| Example 6 | 585 | 98.91 | 98.34 | 0.57 |
| Example 7 | 582 | 99.81 | 99.11 | 0.70 |
| Example 8 | 576 | 99.64 | 99.08 | 0.56 |
| Example 9 | 585 | 99.72 | 99.13 | 0.59 |
| Example 10 | 573 | 99.84 | 99.29 | 0.55 |
| Example 11 | 565 | 99.64 | 98.89 | 0.75 |
| Example 12 | 555 | 99.44 | 98.79 | 0.65 |
| Example 13 | 585 | 99.74 | 99.13 | 0.61 |
| Comparative Example 1 | 438 | 98.68 | 98.61 | 0.07 |
| Comparative Example 2 | 522 | 97.63 | 97.59 | 0.04 |
| Comparative Example 3 | 620 | 91.82 | 91.79 | 0.03 |
| Comparative Example 4 | 666 | 97.65 | 97.81 | -0.16 |

It was confirmed for Examples 1-13 and Ccomparative Examples 1-4 that the polarizing element and polarizing plate according to the present invention exhibit better properties and improved polarization properties at a degree of polymerization of 5,500 than at a degree of polymerization of 2,400. By contrast, there was little improvement in properties in comparative examples 1-4 at a degree of polymerization of 5,500, and, indeed, properties worsened in Comparative Example 4.

As can be seen from Examples 1-13 and Comparative Examples 1-4, using the polarizing element according to the present invention allows a polarizing plate of improved optical properties to be obtained. The polarizing plate so obtained allows for a polarizing element and polarizing plate of improved light, heat, and humidity resistance to be obtained, and a LCD device and a polarizing lens using this polarizing element and polarizing plate exhibit good polarization properties and durability.

[Example 14] A polarizing plate obtained using PVA having a degree of polymerization of 5,500 and a swelling level of 232% obtained in example 1 was cut to a 40 mm square and bonded to a 1-mm-thick 40 × 40 piece of transparent sheet glass using an adhesive (AD-ROC; Polatechno Co., Ltd.) to create a lightfast test sample.

[Example 15] A polarizing plate obtained using PVA having a degree of polymerization of 5,500 and a swelling level of 208% obtained in Example 12 was cut to a 40 mm square and bonded to a 1-mm-thick 40 × 40 mm piece of transparent sheet glass using an adhesive (AD-ROC; Polatechno Co., Ltd.) to create a lightfast test sample.

The samples obtained in Examples 14 and 15 were subjected to a photoirradiation test for 480 hours in an 85°C environment using a high-pressure mercury lamp lightfastness testing device (Ushio 2000W ultra-high-pressure mercury lamp). The test was performed by directing the irradiation light onto the TAC surface. Confirmation of changes in polarization level at 555 nm before and after the test revealed a 96.51% change in polarization level in Example 14, as opposed to a change in polarization level of 97.43% in example 15.

[Example 16] A polarizing plate obtained using PVA having a degree of polymerization of 5,500 and a swelling level of 232% obtained in Example 9 was cut to a 40 mm square and bonded to a 1-mm-thick 40 × 40 mm piece of

transparent sheet glass using an adhesive (AD-ROC; Polatechno Co., Ltd.) to create a lightfast test sample.

[Example 17] A polarizing plate obtained using PVA having a degree of polymerization of 5,500 and a swelling level of 208% obtained in Example 13 was cut to a 40 mm square and bonded to a 1-mm-thick 40 × 40 mm piece of transparent sheet glass using an adhesive (AD-ROC; Polatechno Co., Ltd.) to create a lightfast test sample.

The samples obtained in Examples 16 and 17 were subjected to a photoirradiation test for 480 hours in an 85°C environment using a high-pressure mercury lamp lightfastness testing device (Ushio 2000W ultra-high-pressure mercury lamp) . The test was performed by directing the irradiation light onto the TAC surface. Confirmation of changes in polarization level at 585 nm before and after the test revealed a 97.19% change in polarization level in Example 16, as opposed to a change in polarization level of 98.19% in Example 17.

As is apparent from the results of Examples 14-17, the polarizing element constituted by at least one dichromatic dye and a polyvinyl alcohol resin film having a degree of polymerization of 5,000 to 10,000 according to the present invention exhibits less change in polarization level and higher durability in lightfastness tests when the swelling level of the polyvinyl alcohol resin film is 208% than when it is 232%. This indicates that a polarizing plate constituted by a polyvinyl alcohol resin film having a swelling level of no more than 210% and a degree of polymerization of 5,000-10,000 exhibits little change in polarization level even in lightfastness tests using a powerful light source such as an ultra-high-pressure mercury lamp, in turn indicating that using a polyvinyl alcohol resin film having a swelling level of 200%-210% and a degree of polymerization of 5,500-10,000 allows for a liquid crystal projector using the polarizing element and polarizing plate according to the present invention to maintain stable properties even when used over extended periods.

## Claims

1. A polarizing element **characterized in** comprising a polyvinyl alcohol resin film adsorbing at least one dichromatic pigment that is a compound represented by formula (I) or a salt thereof as a free acid, and being streched, wherein the polyvinyl alcohol resin has a degree of polymerization of 5,000 to 10,000:

[Formula 1]

FORMULA (I)

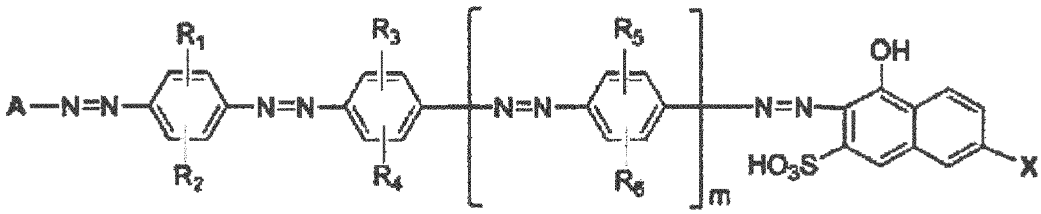

(wherein A represents a phenyl group or a naphthyl group having a substituent; $R_1$-$R_6$ each independently represent a hydrogen atom, a hydroxyl group, a lower alkyl group, a lower alkoxy group, a sulfo group, or a lower alkoxy group having a sulfo group; X represents an amino group optionally having a substituent, a benzoylamino group optionally having a substituent, a phenylamino group optionally having a substituent, a phenylazo group optionally having a substituent, or a naphthotriazole group optionally having a substituent; and m represents 0 or 1).

2. The polarizing element according to claim 1, **characterized in that**, when m = 0 in formula (I), A is represented by formula (II):

[Formula 2]

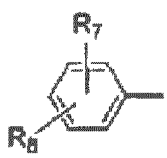

FORMULA (II)

(wherein one of $R_7$ and $R_8$ is a sulfo group, and the other represents a hydrogen atom, sulfo group, lower alkyl

group, carboxyl group, or lower alkoxy group).

3. The polarizing element according to claim 1, **characterized in that**, when m = 0 in formula (I), X is a naphtho triazole group optionally having a substituent and is a transition metal complex or a salt thereof of the compound represented by formula (I).

4. The polarizing element according to claim 1, **characterized in that**, when m = 1 in formula (I), A is a naphthyl group comprising at least one substituent, at least one substituent of the naphthyl group being a sulfo group, and the other substituents being a hydroxy group or a lower alkoxy group having a sulfo group.

5. The polarizing element according to claim 1, **characterized in that**, when m = 1 in formula (I), A is a phenyl group comprising at least one substituent, at least one substituent of the phenyl group being a sulfo group, and the other substituents being a sulfo group, a lower alkyl group, a lower alkoxy group, a lower alkoxy group having a sulfo group, a carboxy group, a nitro group, an amino group, or a substituted amino group.

6. The polarizing element according to any one of claims 1-5, **characterized in that** X is a benzoylamino group optionally having a substituent, a phenylamino group optionally having a substituent, a phenylazo group optionally having a substituent, or a naphthotriazole group optionally having a substituent, the substituents thereof being a lower alkyl group, a lower alkoxy group, a hydroxy group, a carboxy group, a sulfo group, an amino group, or a substituted amino group.

7. The polarizing element according to any one of claims 1-6, **characterized in that** the dichromatic pigment is a compound represented by the following formula (III) or a salt thereof:

[Formula 3]

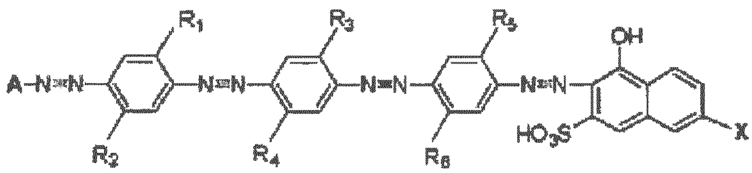

FORMULA (III)

($R_1$-$R_6$ each independently represent a hydrogen atom, a methyl group, a methoxy group, a sulfo group, or a lower alkoxy group having a sulfo group).

8. The polarizing element according to any one of claims 1-7, **characterized in that** the element is obtained using a feedstock film having a swelling level of 200% to 240%.

9. The polarizing element according to any one of claims 1-7, **characterized in that** the element is obtained using a feedstock film having a swelling level of 200% to 210%.

10. A polarizing plate in which a transparent protective layer is provided on at least one side of the polarizing element according to any one of claims 1-9.

11. An LCD device comprising the polarizing element according to any one of claims 1-9 or the polarizing plate according to claim 10.

12. A liquid crystal projector comprising the polarizing element according to any one of claims 1-9 or the polarizing plate according to claim 10.

## INTERNATIONAL SEARCH REPORT

International application No.
PCT/JP2012/072641

A. CLASSIFICATION OF SUBJECT MATTER
*G02B5/30*(2006.01)i, *B32B27/30*(2006.01)i, *C09B31/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, B32B27/30, C09B31/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-251962 A (Sumitomo Chemical Co., Ltd.), 09 September 2004 (09.09.2004), paragraphs [0019] to [0052] & US 2004/0218118 A1 & KR 10-2004-0074939 A & CN 1523375 A & TWB 00I298103 | 1-12 |
| Y | WO 2007/145210 A1 (Nippon Kayaku Co., Ltd., Polatechno Co., Ltd.), 21 December 2007 (21.12.2007), claims 1, 2 & US 2009/0174942 A1 & EP 2031027 A1 & CA 2654868 A & KR 10-2009-0016563 A & CN 101466798 A & TW 200817476 A | 1-3,6-12 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 October, 2012 (01.10.12) | 09 October, 2012 (09.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2012/072641

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-313451 A (Sumitomo Chemical Co., Ltd.), 06 November 2003 (06.11.2003), claim 1 (Family: none) | 1,4,5,7-12 |
| Y | WO 2010/071094 A1 (Kuraray Co., Ltd.), 24 June 2010 (24.06.2010), claim 1; paragraph [0024] & CN 102257044 A & TW 201033273 A & KR 10-2011-0105803 A | 8-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005171231 A
- JP 2007238888 A
- JP 2008120868 A
- JP 2009014873 A
- JP H01105204 B
- JP H03175404 B
- JP 2004075719 A


### Non-patent literature cited in the description


- Senryo Kagaku. HOSODA